# EUROPEAN PATENT SPECIFICATION

(11) **EP 1 369 165 B1**
(45) Date of publication and mention of the grant of the patent: **12.07.2006**
(21) Application number: 03016134.3
(22) Date of filing: 08.08.1996
(51) Int. Cl.: B01D 63/02, B01D 63/04, B01D 65/02

(54) **A membrane module comprising swayable hollow fiber membranes**
Membranmodul mit frei schwingenden Hohlfasermembranen
Module à membranes comprenant des membranes sous forme de fibres creuses oscillant librement

(30) Priority: 11.08.1995 US 514119; 31.07.1996 US 690045
(43) Date of publication of application: 10.12.2003
(62) Divisional of application: 02013232.0
(73) Proprietor: ZENON ENVIRONMENTAL INC., Oakville, Ontario L6M 4B2 (CA)
(72) Inventor: Mahendran, Mailvaganam, Hamilton, Ontario I9C 3T9 (CA); Pedersen, Steven, Kristian, Burlington, Ontario L7N 3E2 (CA); Henshaw, Wayne, Jerald, Burlington, Ontario L7L 3J5 (CA); Behmann, Henry, Puslinch, Ontario 3MH 1M9 (CA)
(74) Representative: Cronin, Brian Harold John

(56) References cited:
- WO-A-94/11094

## Description

This invention relates to a membrane device which is an improvement on a frameless array of hollow fiber membranes the subject of WO-A-9411094 and U.S. Patent No. 5,248,424, hereinafter referred to as the '424 patent.

The '424 patent discloses a membrane device for withdrawing permeate from a multicomponent liquid substrate that has a frameless array of fiber membranes operating unsupported, except for the substrate and not confined in a shell of a module. A pair of spaced-apart headers in the substrate enable the deployed fibers to present an arcuate configuration above a horizontal plane through their centre lines, the opposed terminal ends of the fibers being secured in first and second headers respectively so as to have open ends extending from their faces for discharging the permeate, the open ends being in fluid-tight relationship with each other in each header. Liquid collection means for the permeate are connected to the lower faces of the headers in open fluid communication and means are provided for withdrawing the permeate. The surfaces of the fibers are kept awash in bubbles of fiber-cleansing gas by a gas distribution system having outlets for discharging bubbles, the outlets disposed in a row parallel to a long dimension of rectangular headers.

The '424 patent describes an apparatus for withdrawing filtered permeate from a substrate, comprising a header having a first face and a second face; a receptacle for collecting permeate, the receptacle being in fluid communication with the second face of the header and having a permeate outlet; and a plurality of hollow fibre membranes, the hollow fibre membranes being sealingly secured in the header and extending from the first face of the header, and having ends open to the receptacle for collecting permeate such that a portion of the substrate drawn into the lumens of the fibres as permeate may flow into the receptacle. A pipe or pipes having holes for discharging bubbles, is arranged for aerating the membranes. In some embodiments, these pipes are placed between headers that hold the membranes in an arched configuration, and lie under the arched membranes. In a particular embodiment the gas is supplied through horizontal gas lines disposed horizontally over the headers such that the gas lines divide the membranes into two separate rows.

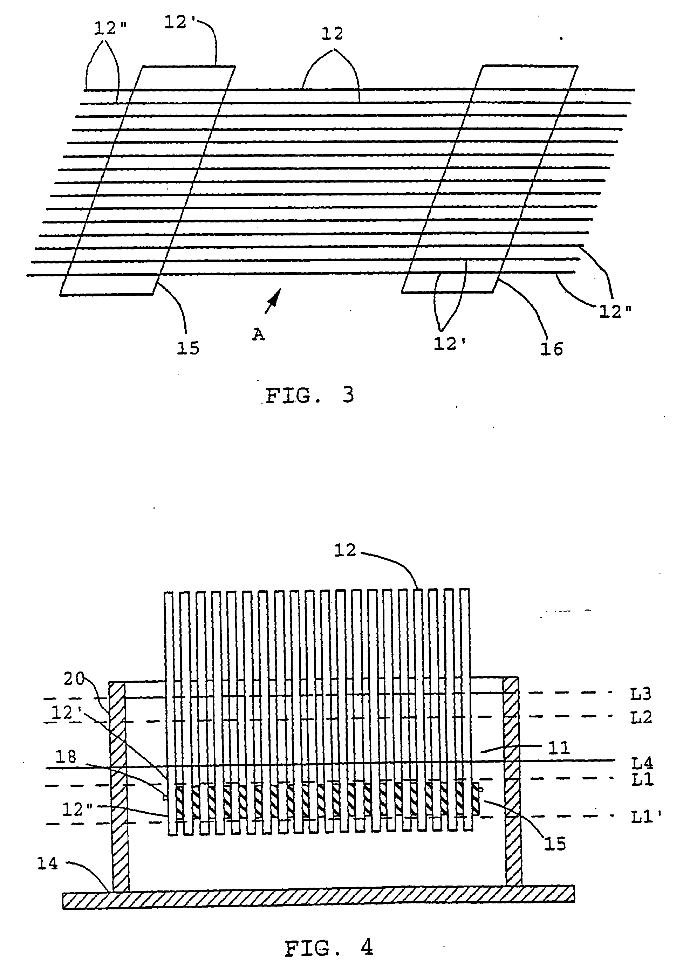

Fig. 3A of the '424 patent discloses an apparatus for withdrawing filtered permeate from a substrate having a gas distribution means adapted to be connected to a source of gas and adapted to discharge bubbles of the gas from near the first face of the header from one or more apertures located in a gas line disposed horizontally on the header between groups of fibres.

### SUMMARY OF THE INVENTION

The invention relates to a membrane module comprising a plurality of hollow fiber membranes immersable and swayable in a substrate from which permeate is to be filtered, the membranes being potted in a closely-spaced-relationship and in fluid-tight relationship within a header that has first and second faces on opposite sides thereof, the membranes extending from the first face of the header so as to be able to contact the substrate, the membranes having open ends flush with or protruding from the second face of the header;
a permeate collection means in fluid communication between the open ends of the membranes and a permeate outlet adapted to be connected to a source of suction; and
a gas distribution means adapted to be connected to a source of gas and adapted to discharge bubbles of the gas within the module such that, in use, the bubbles rise along the outer surfaces of the membranes and cause the membranes to sway.

The membrane module according to the invention is characterized in that the gas distribution means include one or more gas delivery tubes that pass through the header from the second face of the header to the first face of the header from which the membranes extend, said gas delivery tube(s) being arranged to deliver gas through the header in the direction from the second face to the first face for the gas delivered through the header by the gas delivery tube(s) to be discharged as said bubbles.

Preferably, the membranes are mounted relative to one another so as to scrub each other when bubbles are provided. The membranes can be sealed at their lower ends and open at their upper ends to allow removal of permeate through the header.

Advantageously, the gas distribution means discharges bubbles from locations between the membranes.

The membranes extend generally vertically when in use and are not confined in a shell of the module.

The membranes can comprise a braid and a membrane material; in particular the membranes can comprise a braided yarn covered with a water-insoluble polymeric material. The membranes can also comprise an organic polymer with a skin on the outside surface of the membranes.

The membrane module's gas distribution means can have a fitting for connecting the gas distribution means to the source of gas.

The membrane module's gas distribution means can also comprise at least one gas delivery tube that has a portion with a plurality of apertures for discharging bubbles, this tube portion protruding from the first face of the header from a location within the membranes. In this case, this portion of the tube can have apertures for discharging bubbles located around its circumference. This portion of the tube can also have a plurality of apertures for discharging bubbles at a plurality of locations along its length. In these embodiments, the membranes can be potted in a ring around the portion of tube. The gas delivery tube can then pass through the header and through the permeate collection means the permeate collection means being in communication with the header.

In the various embodiments of the membrane module the permeate collection means can be located adjacent to the second face of the header with the lumens of the membranes in fluid communication with the permeate collection means through the second face of the header.

The gas distribution means can further comprise a manifold connected to the one or more gas delivery tubes. For instance, the membranes extend upwards from the header and the manifold is located below the header.

The sway of the module's membranes is confined within a vertical zone of movement, the periphery of which zone is defined by side-to-side movement of outer fibres.

The module can be arranged so that bubbles, when discharged, flow vertically upwards between and parallel to the membranes.

In some embodiments, the ends of the membranes protrude from the second face of the header and open into the permeate collection means and the gas delivery tubes pass through the permeate collection means.

The gas delivery tubes can be arranged to discharge lines of bubbles, a line of bubbles located on each lateral side of the header. In this case, additional lines of bubbles can be located between the membranes such that there are n+1 lines of bubbles for n sets of membranes.

In a membrane module where the membranes extend between upper and lower headers, the length of the membranes is not more than 5% greater than the distance between points where the membranes protrude from the upper and lower headers. In particular, the length of the membranes is between 0.1% and 5% greater than the distance between points where the membranes protrude from the upper and lower headers, or the length of the membranes is between 0.1% and 1% in excess of the distance between points where the membranes protrude from the upper and lower headers.

In one embodiment, the gas delivery tube has an upper open end with an aperture, the gas delivery tube passing through the header and protruding beyond the second face of the header and communicating with a plenum for carrying air to the gas delivery tube. In this embodiment, ends of the membranes can protrude from the second face of the header and open into the permeate collection means and the air tube passes through the permeate collection means.

The module header can have a cushioning lamina surrounding the membranes where they extend from the header.

Another aspect of the invention is a system for withdrawing filtered permeate from a substrate, comprising: a tank or reservoir containing a substrate at ambient pressure; a module of hollow fiber membranes as set out above; a source of suction in fluid communication with the permeate outlet of each module and operable to supply suction to withdraw permeate from the lumens of the membranes; and, a source of gas connected to the gas distribution means to supply a gas continually or intermittently.

This system can have a backwashing system for backwashing the module(s) with a liquid. The backwashing liquid can comprise permeate.

The system's the tank or reservoir may contain a slow moving or captive substrate.

The system can also have a fitting located above the substrate for connecting the gas delivery tube or tubes to the source of gas.

The system's the tank or reservoir is for example a dead end tank.

Though the shape of a header may be arbitrary, for ease of fabrication, each header of a pair is either a rectangular parallepiped or a cylindrical disc. Rectangular vertical skeins are potted in rectangular headers; cylindrical vertical skeins are potted in cylindrical headers. For maximum utilization of space on a header, the fibers are densely packed in rows, or, in a spiral pattern by rolling a large array into a spiral roll and potting each end of the spiral roll directly in a cylindrical resin-confining means. Such resin-confining means is typically a rectangular or cylindrical pan or end-cap. Either configuration of header may be used in a variety of different embodiments as disclosed in the illustrative examples.

### BRIEF DESCRIPTION OF THE DRAWINGS

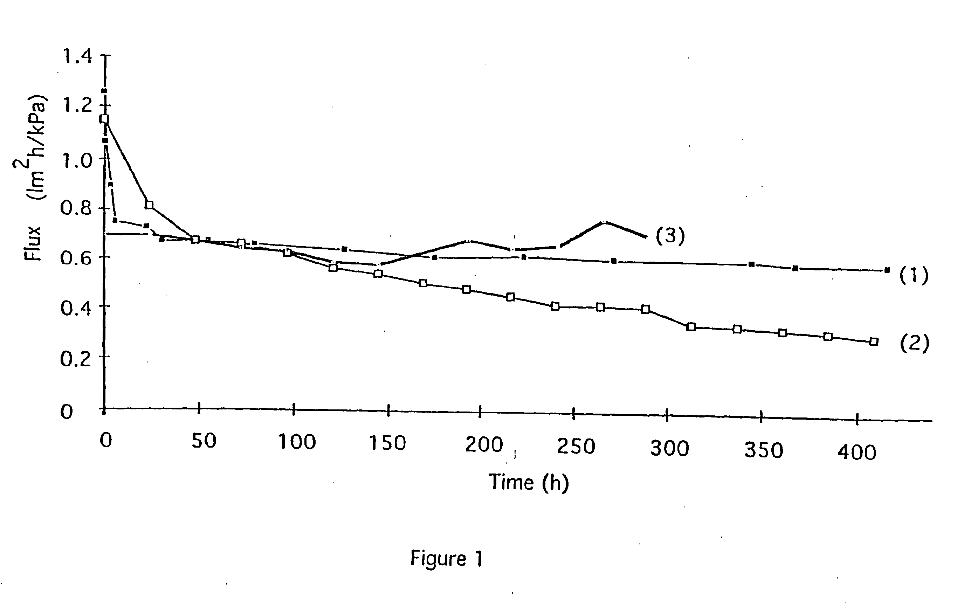

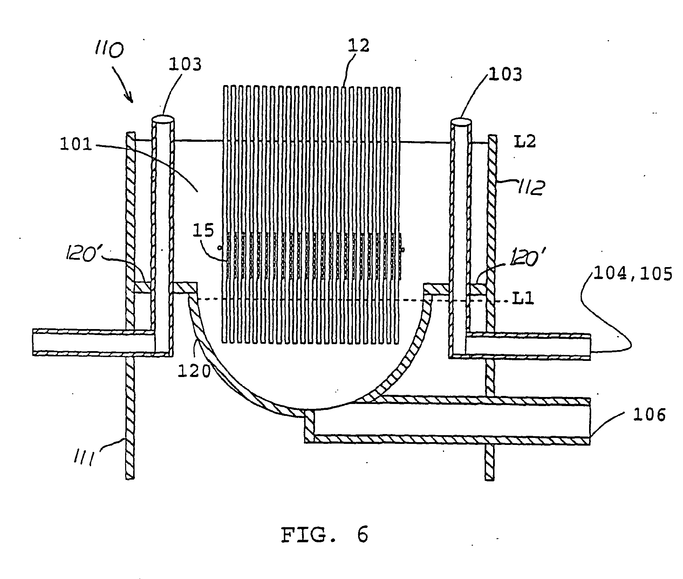

The membrane module and system of the invention will best be understood by reference to the following detailed description, accompanied by schematic illustrations of preferred embodiments of the invention, in which illustrations like reference numerals refer to like elements. Embodiments of the invention are described and illustrated primarily with reference to Figures 6, 8, 16 and 17, whereas Figures 1 to 5, 7, 9 to 15 and 18 to 20 illustrate examples of features useful for understanding and for carrying out the invention. In the drawings:
Figure 1 is a graph in which the variation of flux is plotted as a function of time showing three curves for three runs made with three different arrays, in each case, using the same amount of air, the identical membranes and the same membrane surface area. The results obtained by Yamamoto et al (as discussed in the '424 patent) are plotted as curve 2 (under conditions modified to give them the benefit of doubt as to the experimental procedure employed, as explained below); the flux obtained using the gas-scrubbed assembly of the '424 patent is shown as curve 1; and the flux obtained using the gas-scrubbed assembly of this invention is shown as curve 3.
Figure 2 is a perspective exploded view schematically illustrating a membrane device comprising skein fibers which are unsupported and unattached one to another intermediate the headers, with the ends of the fibers potted in a lower header, shown during operation of the device, with a permeate collection pan, and a permeate withdrawal conduit.
Figure 2A is an enlarged detail side elevational view of a side wall of a collection pan showing the profile of a header-retaining step atop the periphery of the pan.
Figure 2B is a bottom plan view of the header showing a random pattern of open ends protruding from the aft face of a header when fibers are potted after they are stacked in rows and glued together before being potted.
Figure 3 is a perspective view of a single array, schematically illustrated, of a row of substantially coplanarly disposed parallel fibers secured near their opposed terminal ends between spaced apart cards. Typically, multiple arrays are assembled before being sequentially potted.
Figure 4 illustrates an end view of a stack of arrays in end view, clamped together, showing that the individual fibers (only the last fiber of each linear array is visible, the remaining fibers in the array being directly behind the last fiber) of each array are separated by the thickness of a strip with adhesive on it, as the stack is held vertically in potting liquid.
Figure 5 is a perspective view schematically illustrating a skein with its integral finished header, its permeate collection pan, and twin air-tubes feeding an integral air distribution manifold potted in the header along an outer edge of the skein fibers.
Figure 6 is a side elevational view of an integral finished header according to the invention showing details of a permeate pan submerged in substrate, the walls of the header resting on the bottom of a reservoir, and multiple air-tubes feeding integral air distribution manifolds potted in the header along each outer edge of the skein fibers.
Figure 7A is a perspective view schematically illustrating an air-manifold from which vertical air-tubes rise, useful in the invention.
Figure 7B is a perspective view schematically illustrating a tubular air-manifold having a transverse perforated portion, positioned by opposed terminal portions.
Figure 8 is a perspective view of an integral finished header according to the invention having plural skeins potted in a common header molded in an integral permeate collection means with air-tubes rising vertically through the header between adjacent skeins, and along the outer peripheries of the outer skeins.
Figure 9 is a detail, not to scale, illustratively showing a gas distribution means discharging gas between arrays in a header, and optionally along the sides of the lower header, the gas distribution means between the arrays corresponding to a gas distribution means of Fig. 3A of the '424 patent.

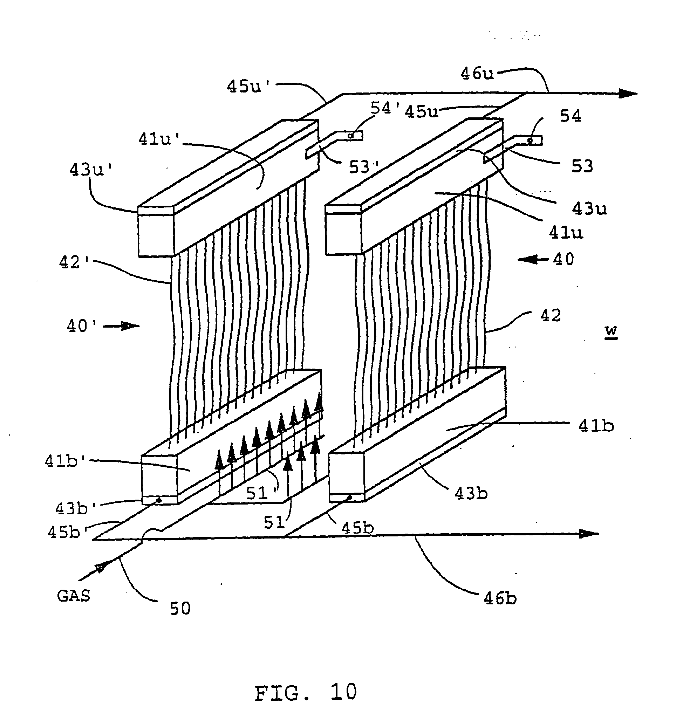

Figure 10 is a perspective view schematically illustrating a pair of skeins in a bank in which the upper headers are mounted by their ends on the vertical wall of a tank. The skeins in combination with a gas-distribution means form a "gas-scrubbing assembly" deployed within a substrate, with the fibers suspended essentially vertically in the substrate. Positioning the gas-distribution means between the lower headers (and optionally, on the outside of skein fibers) generate masses (or "columns") of bubbles which rise vertically, co-directionally with the fibers, yet the bubbles scrub the outer surfaces of the fibers.
Figure 11 is a perspective view of another embodiment of the scrubbing-assembly showing plural skeins (only a pair is shown) connected in a bank with gas-distribution means disposed between successive skeins, and, optionally, with additional gas-distribution means fore and aft the first and last skeins, respectively.
Figure 12 is an elevational view schematically illustrating a bank of skeins mounted against the wall of a bioreactor, showing the convenience of having all piping connections outside the liquid.
Figure 13 is a plan view of the bioreactor shown in Fig 12 showing how multiple banks of skeins may be positioned around the circumference of the bioreactor to form a large permeate extraction zone while a clarification zone is formed in the central portion with the help of baffles.
Figure 14 is a cross-sectional view schematically illustrating a cylindrical skein having upper and lower end-cap integral headers in each of which is directly potted an array of fibers in a finished header sealed at its periphery to the wall of the end-cap without a gasket.
Figure 14A is a bottom plan view of a potted array held as a roll in a fiber-setting form, before the end of the roll is potted in a ring, so as to form an integral header in which the pattern of fibers is spiral.
Figure 14B is a bottom plan view of a series of potted cylindrical arrays referred to as "ring arrays" because the ends are secured in stiff cylindrical rings, the arrays being nested with each successive ring array being slid over the previous one. The nested rings are then potted in a resin-confining ring.
Figure 14C is a bottom plan view of a series of planar arrays, the widths of each being chosen so that they may be stacked, chord-like (that is, as successive chords in the resin-confining ring) before the stack is potted in the ring.
Figure 15 is a cross-sectional view schematically illustrating a cylindrical skein and end-cap integral headers as in Fig 14, except that permeate is withdrawn from only the upper header.
Figure 15A is a perspective view of a cross-shaped sparger with a central air-tube and sparging arms.
Figure 16 is a side elevational view of an embodiment of the invention schematically illustrating a cylindrical skein in which a ring header is formed first. The ring header is then sealed into an end-cap. In addition to the permeate tube, a rigid air supply tube is inserted through the upper end-cap and upper header into the central portion of the skein, the lower portion of the air supply tube being potted in the lower header, thus functioning as a spacer means, and at the same time, as a support for the upper end-cap.
Figure 17 illustratively shows another embodiment of the invention in which the permeate tube is concentrically disposed within the air supply tube, and both are potted, near their lower ends in the lower header. Ports in the lower end of the air supply tube provide air near the base of the skein fibers.
Figure 18 is a bar graph showing the average flux over a 24 hr period for each of three different orientations of the skein.
Figure 19 is a plot of flux as a function of time, until the flux reaches an equilibrium value, for the same skein with internal and with external aeration.
Figure 20 is a plot of flux as a function of time, until the flux reaches an equilibrium value, for skeins having identical surface area except that the fibers are taut in one, and slack in the other.

### DETAILED DESCRIPTION OF PREFERRED EMBODIMENTS

### The Vertical Skein and the Arrays which form it:

The skein is used in liquid-liquid microfiltration processes to remove micron, sub-micron and larger suspended solids such as organic molecules, emulsified organic liquids and colloidal or suspended solids, usually from water. Typical applications are (i) in a membrane bioreactor, to produce permeate as purified water, (ii) filtration of secondary efflnent from wastewater treatment, to remove suspended solids and pathogenic bacteria; (iii) clarification of aqueous streams to produce drinking water (removal of colloids, long chain carboxylic acids and pathogens); (iv) separation of a permeable liquid component in biotechnology broths; (v) dewatering of metal hydroxide sludges; and, (vi) filtration of oily wastewater, inter alia.

Typically the skein is configured so that all connections for fluids entering or leaving the skein are provided in the upper header. Permeate is most preferably withdrawn through a tube passing through the upper header whether (i) the lower header collects no permeate (as explained below); or (ii) permeate collects in both the upper and lower headers. The skein preferably operates in a substrate held in a reservoir at atmospheric pressure (1 bar) or above, in the range up to about 10 bar in a pressurized vessel, without being confined within the shell of a module.

One or more arrays are potted in headers, the upper (or "fore") and lower (or "aft") surfaces of which are in horizontal (x-y) planes. Instead of a single continuous array, plural arrays may be made and joined together, end-to-end successively, to form a much larger array which can be extended.

Operation of the skein is affected by (a) the fiber chosen, (b) the amount of air used, and (c) the substrate to be filtered. The goal is to filter a slow-moving or captive substrate in a large container under ambient or elevated pressure, but preferably under essentially ambient pressure, and to maximize the efficiency of a skein which does so (filters) practically and economically.

By operating at ambient pressure, mounting the integral headers of the skein within a reservoir of substrate, and by allowing the fibers restricted movement within the bubble zone in a substrate, we minimize damage to the fibers. Because, a header secures at least 10, preferably from 50 to 50,000 fibers, each generally at least 0.5 m long, in a skein, it provides a high surface area for filtration of the substrate.

### The Fibers and How they are Densely Packed:

The fibers divide a reservoir into a "feed zone" and a withdrawal zone referred to as a "permeate zone". The feed of substrate is introduced externally (referred to as "outside-in" flow) of the fibers, and resolved into "permeate" and "concentrate" streams. The skein, or a bank of skeins of this invention is most preferably used for microfiltration with "outside-in" flow. Though at least one skein is replaceably disposed in a small reservoir having a volume up to about 10 L (liters) and even up to about 100 L or more, a bank of skeins is preferably used in a relatively large reservoir having a volume in excess of 1000 L, such as a flowing stream, more typically a pond or tank. Most typically, a bank or plural banks with collection means for the permeate, are mounted in a large tank under atmospheric pressure, and permeate is withdrawn from the tank.

The fibers used to form the skein may be formed of any conventional membrane material provided the fibers are flexible and have an average pore cross sectional diameter for microfiltration, namely in the range from about 1000Å to 10000Å. Typically fibers range from 1 m to about 5 m long, depending upon the dimensions of the body of substrate (depth and width) in which the skein is deployed. Preferred fibers operate with a transmembrane pressure differential in the range from 7 kPa (1 psi) - 69 kPa (10 psi) and are used under ambient pressure with the permeate withdrawn under gravity. The fibers are chosen with a view to perform their desired function, and the dimensions of the skein are determined by the geometry of the headers and length of the fibers. It is unnecessary to confine a skein in a modular shell, and a skein is not.

For hollow fiber membranes, the outside diameter ("o.d.") of a fiber is at least 20µm and may be as large as about 3 mm, typically being in the range from about 0.1 mm to 2 mm. The larger the o.d. the less desirable the ratio of surface area per unit volume of fiber. The fiber wall thickness is at least 5µm and may be as much as 12 mm, typically being in the range from about 15% to about 60% of the o.d. of the fiber, most preferably from 0.5 mm to 1.2 mm.

The number of fibers in a single array is arbitrary, typically being in the range from about 1000 to about 10000 for commercial applications, and the preferred surface area for a skein is preferably at least > 1 m², typically from 10 m² to 100 m². The center to center distance of adjacent fibers is preferably in the range from 1.2 (1.2d) to about 5 times (5d) the o.d. 'd' of a fiber. Preferred center-to-center spacing is from about 1.5d to 2d. The packing density of fibers, that is, the number of fibers per unit area of header preferably ranges from 4 to 50 fibers/cm² depending upon the diameters of the fibers.

The particular method of securing the fibers in each of the headers is not narrowly critical, the choice depending upon the materials of the header and the fiber, and the cost of using a method other than potting. However, it is essential that each of the fibers be secured in fluid-tight relationship within each header to avoid contamination of permeate. This is effected by potting the fibers essentially vertically, in closely-spaced relationship, substantially concentrically.

Preferred fibers are made of organic polymers and ceramics, whether isotropic, or anisotropic, with a thin layer or "skin" on the outside surface of the fibers. Fibers may be made from braided yarn covered with a water-insoluble polymeric material such as those disclosed in U.S. Patent No. 5,472,607. Preferred organic polymers for fibers are polysulfones, poly(styrenes), including styrene-containing copolymers such as acrylonitrile-styrene, butadiene-styrene and styrene-vinylbenzylhalide copolymers, polycarbonates, cellulosic polymers, polypropylene, poly(vinyl chloride), poly(ethylene terephthalate), and the like disclosed in U.S. Patent No. 4,230,463 the disclosure of which is incorporated by reference thereto as if fully set forth herein. Preferred ceramic fibers are made from alumina, by E. I. duPont deNemours Co. and disclosed in U.S. Patent No. 4,069,157.

### The Headers:

One integral header of a skein is displaceable in any direction relative to the other, either longitudinally (x-axis) or transversely (y-axis), only prior to submerging the skein for operation. To use a skein, the headers are vertically spaced apart in parallel relationship within a reservoir, for example, by mount-ing one header above another against a vertical wall of the reservoir which functions as a spacer means. This is also true prior to spacing one header directly above another with other spacer means such as bars, rods, struts, I-beams, channels, and the like, to assemble plural skeins into a "bank or cluster of skeins" ("bank" for brevity). After assembly into a bank, a segment intermediate the potted ends of each individual fiber is displaceable along either the x- or the y-axis, because the fibers are loosely held in the skein.

Most preferably, each integral header is directly potted in a suitable material from which the header of cured potting resin is not removed, requiring no gasket (hence referred to as "gasketless") between the cured resin of the header and the inner periphery of the permeate collection means. When the integral header is adhesively secured in a pan or "end-cap" to form a permeate-collection zone, again, no gasket is required, though one may be used if the integral header is to be disassembled.

The fixing material to fix the fibers in a finished header (or fixing lamina) is most preferably either a thermosetting or thermoplastic synthetic resinous material, optionally reinforced with glass fibers, boron or graphite fibers and the like. Thermoplastic materials may be crystalline, such as polyolefins, polyamides (nylon), polycarbonates and the like, semi-crystalline such as polyetherether ketone (PEEK), or substantially amorphous, such as poly(vinyl chloride) (PVC), polyurethane and the like. Thermosetting resins commonly include polyesters, polyacetals, polyethers, cast acrylates, thermosetting polyurethanes and epoxy resins. Most preferred as a "fixing" material (so termed because it fixes the locations of the fibers relative to each other) is one which when cured is substantially rigid in a thickness of about 2 cm, and referred to generically as a "plastic" because of its hardness. Such a plastic has a hardness in the range from about Shore D 30 to Rockwell R 110 and is selected from the group consisting of epoxy resins, phenolics, acrylics, polycarbonate, nylon, polystyrene, polypropylene and ultra-high molecular weight polyethylene (UHMW PE). Polyurethane such as is commercially available under the brand names Adiprene® from Uniroyal Chemical Company and Airthane® from Air Products, and commercially available epoxy resins such as Epon 828 are excellent fixing materials.

The resulting membrane device comprises, (i) a vertical skein of a multiplicity of restrictedly swayable fibers, together having a surface area in the range from 1 m² to 1000 m², preferably from 10 m² to 100 m², secured only in spaced-apart headers; and (ii) a gas-scrubbing means which produces a column of bubbles rising within and near the base of the skein, and engulfing the skein. Bubbles generated have an average diameter in the range from about 0.1 mm to about 25 mm, or even larger. A liquid component is selectively removed from the substrate.

### The Gas-Scrubbed Assembly:

A gas-scrubbed assembly comprises, (a) at least one skein, or a bank of gas-scrubbed skeins of fibers which separate a desired permeate from a large body of multicomponent substrate having finely divided particulate matter in the range from 0.1µm - 44µm dispersed therein, (b) each skein comprising at least 20 fibers having upper and lower terminal portions potted spaced-apart, in upper and lower headers, respectively, the fibers being restrictedly swayable in a bubble zone, and (c) a shaped gas-distribution means adapted to provide a profusion of vertically ascending bubbles in a column above and in close proximity to the upper face of the lower header, the length of the fibers being from at least 0.1% but less than 5% greater than the distance between the opposed faces of the headers. The shaped gas-distribution means has through-passages therein through which gas is flowed, continuously or intermittently, at a flow rate which is proportional to the number of fibers. The flow rate is generally in the range from 0.47 - 14 cm³/sec per fiber (0.001 - 0.03 scfm/fiber) (standard ft³ per minute per fiber), typically in the range from 1.4 - 42 cm³/sec/fiber (0.003 - 0.009 scfm/fiber). In a mini-skein, The surface area of the fibers is not used to define the amount of air used because the air travels substantially vertically along the length of each fiber.

The gas-scrubbed assembly is used (i) in combination with vertically adjustable spacer means for mounting the headers in vertically spaced apart relationship, in open fluid communication with (ii) collection means for collecting the permeate; means for withdrawing the permeate; and, (iii) sufficient air to generate enough bubbles flowing upwardly through the skein, between and parallel to the fibers so as to keep the surfaces of the fibers substantially free from deposits of live microorganisms as well as small inanimate particles which may be present in the substrate.

With surprisingly little cleansing gas discharged from a sparger disposed between fibers near their base, the flux at equilibrium is maintained over a long period, typically from 50 hr to 1500 hr. The sparger of a gas-distribution means is disposed adjacent the upper face of the lower header to generate a column of rising bubbles within which column the fibers are awash in bubbles. A bank of skeins may additionally be "gas-scrubbed" with one or more air-tubes disposed between the lower headers of adjacent skeins, most preferably, also adjacent the outermost fibers of the first and last skeins, so that for "n" headers there are "n + 1" additional air-tubes. The type of gas (air) manifold is not narrowly critical provided it delivers bubbles in a preferred size range from about 0.1 mm to 25 mm, measured within a distance of from 1 cm to 50 cm from the through-passages generating them.

### Operation of the System:

Operation of the system relies upon positioning at least one skein, preferably a bank, close to a source of sufficient air or gas to maintain a desirable flux, and, to enable permeate to be collected from at least one header. A desirable flux is obtained, and provides the appropriate transmembrane pressure differential of the fibers under operating process conditions.

The transmembrane pressure differential is preferably generated with a conventional non-vacuum pump if the transmembrane pressure differential is sufficiently low in the range from 0.7 kPa (0.1 psi) to 101 kPa (1 bar), provided the pump generates the requisite suction. A pump which generates minimal suction may be used if an adequate "liquid head" is provided between the surface of the substrate and the point at which permeate is withdrawn. Moreover, as explained in greater detail below, once the permeate flow is induced by a pump, the pump may not be necessary, the permeate continuing to flow under a "siphoning effect". Clearly, operating with fibers subjected to a transmembrane pressure differential in the range up to 101 kPa (14.7 psi), a non-vacuum pump will provide adequate service in a reservoir which is not pressurized; and, in the range from 101 kPa to about 345 kPa (50 psi), by superatmospheric pressure generated by a high liquid head, or, by a pressurized reservoir.

A process for separating a permeate from a substrate while maintaining relatively clean surfaces of fibers in an array, comprises, submerging a skein of restrictedly swayable substantially vertical fibers within the substrate so that upper and lower end-caps of the skein are mounted one above the other with a multiplicity of fibers secured between headers, the fibers having their opposed terminal portions potted in open fluid communication with at least one header; the fibers operating under a transmembrane pressure differential in the range from about 0.7 kPa (0.1 psi) to about 345 kPa (50 psi), and a length from at least 0.1% to about 2% greater than the direct distance between the opposed upper and lower faces of cured resin in the headers, so as to present, when the fibers are deployed, a generally vertical skein of fibers; maintaining an essentially constant flux substantially the same as the equilibrium flux initially obtained, indicating that the surfaces of the fibers are substantially free from further build-up of deposits once the equilibrium flux is attained; collecting the permeate; and, withdrawing the permeate.

The foregoing process may be used in the operation of an anaerobic or aerobic biological reactor which has been retrofitted with the membrane device of this invention. The anaerobic reactor is a dosed vessel and the scrubbing gas is a molecular oxygen-free gas, such as nitrogen.

An aerobic biological reactor may be retrofitted with at least one gas-scrubbed bank of vertical cylindrical skeins, each skein made with from 500 to 5000 fibers in the range from 1 m to 3 m long, in combination with a permeate collection means, to operate the reactor without being encumbered by the numerous restrictions and limitations imposed by a secondary clarification system.

Typically, there is no cross flow of substrate across the surface of the fibers in a "dead end" tank. If there is any flow of substrate through the skein in a dead end tank, the flow is due to aeration provided beneath the skein, or to such mechanical mixing as may be employed to maintain the solids in suspension. There is generally more flow and higher fluid velocity through the skein in a tank into which substrate is being continuously flowed, but the velocity of fluid across the fibers is generally too insignificant to deter growing microorganisms from attaching themselves, or suspended particles, e.g. microscopic siliceous particles, from being deposited on the surfaces of the fibers.

Fig 1 presents the results of a comparison of three runs made, one using the teachings of Yamamoto in his '89 publication (curve 2), but using an aerator which introduced air from the side and directed it radially inwards, as is shown in Chiemchaisri et al. (as discussed in the '424 patent). A second run (curve 1) uses the gas-scrubbed assembly of the '424 patent, and the third run (curve 3) uses a gas-scrubbed skein as described herein except that the headers were rectangular parallelpipeds. The flux obtained with an assembly of an inverted parabolic array with an air distributor means (Yamamoto et al), as disclosed in Wat. Sci. Tech. Vol. 21, Brighton pp 43-54, 1989, and, the parabolic array by Cote et al in the '424 patent, are compared to the flux obtained with the vertical skein of this invention.

The comparison is for the three assemblies having fibers with nominal pore size 0.2 µm with essentially identical bores and surface area in 80 L tanks filled with the same activated sludge substrate. The differences between the stated experiment of Yamamoto et al, and that of the '424 patent are of record in the '424 patent, and the conditions of the comparison are incorporated by reference thereto as if fully set forth herein. The vertical skein used herein differs from the '424 skein only in the vertical configuration of the 280 fibers, each of which was about 1% longer than the distance between the spaced apart headers during operation. The flow rate of air for the vertical skein is 1.4 m³/hr/m² using a coarse bubble diffuser.

It will be evident from Fig 1 in which the flux, liters per meter² per hr per unit pressure (conventionally written as (Lmh/kPa), is plotted as a function of operating time for the three assemblies, that the curve, identified as reference numeral 3 for the flux for the vertical skein, provides about the same flux as the parabolic skein, identified as reference numeral 1. As can be seen, each flux reaches an equilibrium condition within less than 50 hr, but after about 250 hr, it is seen that the flux for the inverted parabolic array keeps declining but the other two assemblies reach an equilibrium.

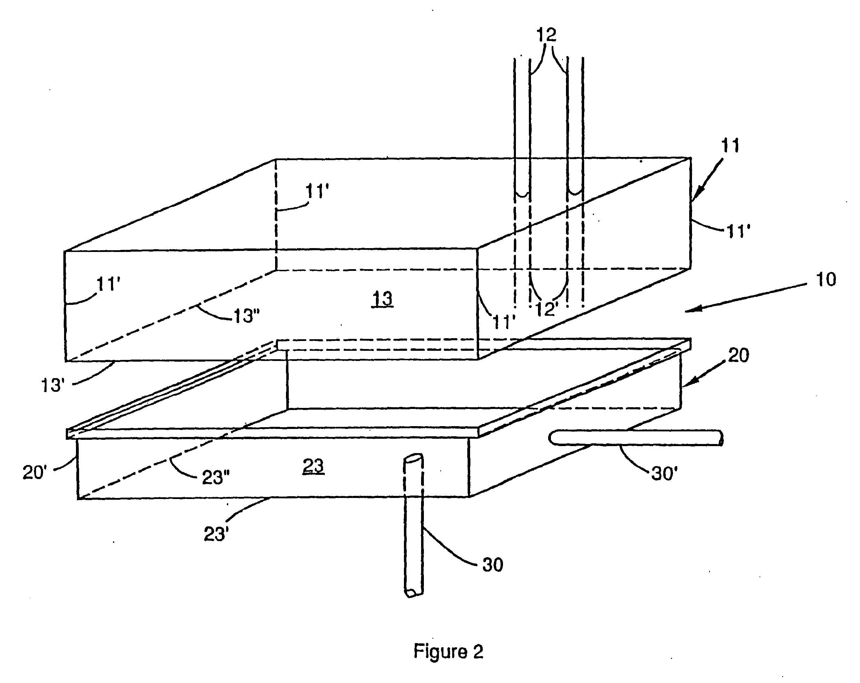

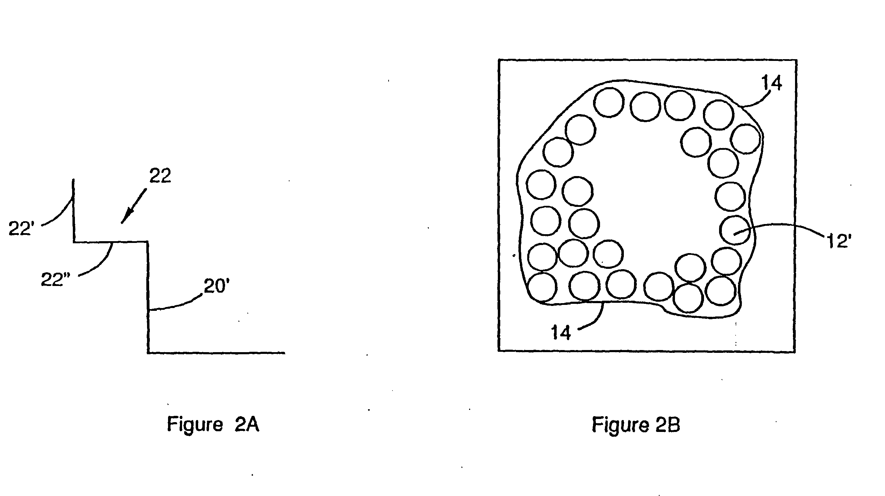

Referring to Fig 2 there is illustrated, in exploded view a portion of a membrane device referred to as a "vertical skein" 10, comprising a lower header 11 of a pair of headers, the other upper header (not shown) being substantially identical; collection pan 20 collects permeate which is withdrawn through conduit 30. The header shown is a rectangular prism but could be cylindrical if desired. Though densely packed, the fibers 12 are not in contact with each other but spaced apart by the cured resin between them.

As illustrated, the open ends of the terminal portions 12' of the fibers are in the same plane as the lower face of the header 11 because the fibers are conventionally potted and the header sectioned to expose the open ends. A specific potting procedure in which the trough of a U-shaped bundle of fibers is potted, results in forming two headers. This procedure is described in the '424 patent (col 17, lines 44-61); however, even cutting the potted fibers with a thin, highspeed diamond blade, tends to damage the fibers and initiate the collapse of the circumferential wall. In another conventional method of potting fibers, described in U.S. Patent No. 5,202,023, bundled fibers have their ends dipped in resin or paint to prevent resin penetration into the bores of the fibers during the potting process. The ends of the bundle are then placed in molds and uncured resin added to saturate the ends of the fiber bundle and fill the spaces between the individual fibers in the bundle and the flexible tubing in which the bundle is held. The cured, molded ends are removed from the molds and the molded ends cut off (see, bridging cols 11 and 12). In each prior art method, sectioning the mold damages the embedded fibers.

Therefore a novel method is used to form a header 11 in the form of a rectangular prism. The method requires forming a composite header with two liquids. A first liquid fugitive material, when solidified (cured), forms a "fugitive lamina" of the composite header; a second liquid of non-fugitive fixing material forms a "fixing lamina".

The first liquid is poured around terminal portions of fibers, allowed to cool and solidify into a fugitive lamina; the fibers in the fugitive lamina are then again potted, this time by pouring the second liquid over the solid fugitive lamina.

In greater detail, the method for forming a finished header for skein fibers comprises,
forming a bundle of fibers in at least one array supported on a support means having a thickness corresponding to a desired lateral spacing between adjacent fibers;
holding the bundle in a first liquid with terminal portions of the fibers submerged, until the liquid solidifies into a first shaped lamina, provided that the first liquid is unreactive with material of the fibers;
pouring a second liquid over the first shaped lamina to embed the fibers to a desired depth, and solidifying the second liquid to form a fixing lamina upon the first shaped lamina, the second liquid also being substantially unreactive with either the material of the fibers or that of the first shaped lamina;
whereby a composite header is formed in which terminal portions of the fibers are potted, preferably in a geometrically regular pattern, the composite header comprising a laminate of a fugitive lamina of fugitive material and a contiguous finished header of fixing lamina; and thereafter,
removing the first shaped lamina without removing a portion of the fixing lamina so as to leave the ends of the fibers open and protruding from the aft face of the header, the open ends having a circular cross-section.

The step-wise procedure for forming an array with the novel header is described with respect to an array illustrated in Fig 3, as follows:

Fibers 12 are each cut to about the same length with a sharp blade so as to leave both opposed ends of each fiber with an essentially circular cross-section. The fibers are coplanarly disposed side-by-side in a linear array on a planar support means such as strips or cards 15 and 16. Preferably the strips are coated with an adhesive, e.g. a commercially available polyethylene hot-melt adhesive, so that the fibers are glued to the strips and opposed terminal portions 12" respectively of the fibers, extend beyond the strips. Intermediate portions 12' of the fibers are thus secured on the strips. Alternatively, the strips may be grooved with parallel spaced-apart grooves which snugly accommodate the fibers. The strips may be flexible or rigid. If flexible, strips with fibers adhered thereto, are in turn, also adhered to each other successively so as to form a progressively stiffer stack for a header having a desired geometry of potted fibers. To avoid gluing the strips, a regular pattern of linear rows may be obtained by securing multiple arrays on rigid strips in a stack, with rubber bands 18 or other clamping means. The terminal portions 12" are thus held in spaced-apart relationship, with the center to center distance of adjacent fibers preferably in the range from 12 (1.2d) to about 5 times (5d) the o.d. 'd' of a fiber, more preferably in the range from 1.5d to 2d. Preferably, the thickness of a strip is about the same as, or relatively smaller than the o.d. of a fiber, preferably from about 0.5d to 1d thick, which becomes the spacing between adjacent outside surfaces of fibers in successive linear arrays.

Having formed a first array, second and third arrays (not shown because each would appear essentially identical to the first) is prepared in a manner analogous to the first, and overlaid thereupon. Additional arrays are overlaid until the desired number of arrays are bundled, and the bundle held vertically to present the lower portion of the bundle to be potted first.

Referring to Fig 4, there is schematically illustrated a rectangular potting pan 17 the length and width dimensions of which correspond substantially to the longitudinal (x-axis) and transverse (y-axis) dimensions respectively, of the desired header. The lower portion of the bundle is submerged in a first liquid which rises to a level indicated by L1, in the pan 17. Most preferred is a liquid wax, preferably a water-soluble wax having a melting point lower than 75°C, such as a polyethylene glycol (PEG) wax.

The depth to which the first liquid is poured will depend upon whether the strips 15 are to be removed from, or left in the finished header.
A. First illustrated is the potting of skein fibers in upper and lower headers from which the strips will be removed.
   (1) A first shaped lamina having a thickness L1 (corresponding to the depth to which the first liquid was poured) is formed from about 5 - 10 cm thick (fugitive) so that 12' and 12" are spaced apart and ends of the fibers are plugged.
   (2) The second liquid, a curable, water-insoluble liquid potting resin, or reactive components thereof, is poured over the surface of the fugitive lamina to surround the fibers, until the second liquid rises to a level L2. It is solidified to form the fixing lamina (which will be the finished header) having a thickness measured from the level L1 to the level L2 (the thickness is written "L1-L2", typically from about 1 cm to about 5 cm) maintains the relative positions of the vertical fibers. A first composite header is thus formed having the combined thicknesses of the fugitive and fixing laminae.
   (3) In a manner analogous to that described immediately hereinabove, the upper portion of the bundle is potted in a second composite header.
   (4) The composite headers are demolded from their potting pans and hot air blown over them to melt the fugitive laminae, leaving only the finished headers, each having a thickness L1-L2. The fugitive material is then reused. Alternatively, a water-soluble fugitive material may be placed in hot water to dissolve the material, and the material is recovered from its water solution.
   (5) The ends of the fibers left protruding from the permeate-discharging aft faces of the headers, are open and retain a circular cross-section.
B. Illustrated second is potting without removing the strips.
   (1) The first liquid is poured to a level L1' below the cards, to a depth in the range from about 1 - 2.5 cm, and solidified, foriming fugitive lamina L1'.
   (2) The second liquid is then poured over the fugitive lamina to depth L2 and solidified, forming a composite header with a fixing lamina having a thickness L1'-L2.
   (3) The composite header is demolded and the fugitive lamina removed, leaving the terminal portions 12" protruding from the aft face of the finished header, which aft face is formed at what had been the level L1'. The finished header having a thickness L1'-L2 embeds the strips 15 (along with the rubber bands 18, if used).
C. Illustrated third is potting to form a cushioning lamina embedding the fibers on the opposed (fore) faces of the headers from which the strips will be removed.
   The intermittent 'snapping' motion of the fibers tends to break fibers around their circumferences, at the interface of the fore face and substrate. To combat hardness of the "fixing lamina" a "cushioning lamina" is formed of material softer than the fixing lamina, integrally therewith, by pouring cushioning liquid (so termed for its function when cured) over the fixing lamina to a depth L3 as shown in Fig 4. Its depth provides 'give' around the circumferences of the fibers to minimize the risk of shearing. Such cushioning liquid, when cured is rubbery, having a hardness in the range from about Shore A 30 to Shore D 45, and is preferably a polyurethane or silicone or other rubbery material which will adhere to the fixing lamina. Upon removal of the fugitive lamina, the finished header thus formed has the combined thicknesses of the fixing lamina and the cushioning lamina, namely L1-L3 when the strips 15 are cut away.
D. Illustrated fourth is forming a gasketing lamina.
   Whichever finished header is made, it is preferably fitted into a permeate pan 20 as illustrated in Fig 2 with a peripheral gasket Because it is easier to seal the pan against a gasketing lamina, than against a peripheral narrow gasket, a gasketing material having a hardness in the range from Shore A 40 to Shore D 45, forms a desirable gasketing lamina integrally with the aft face of the finished header. When the strips are cut away, the fugitive lamina is formed as before, and a gasketing liquid (so termed because it forms the gasket when cured) is poured over the surface of the fugitive lamina to a depth L4. The gasketing liquid is then cured. Removing the fugitive lamina, and cutting the strips 15 away, leaves the finished header having a combined thicknesses of the gasketing lamina (L1-L4), the fixing lamina (L4-L2) and the cushioning lamina (L2-L3), namely an overall L1-L3.

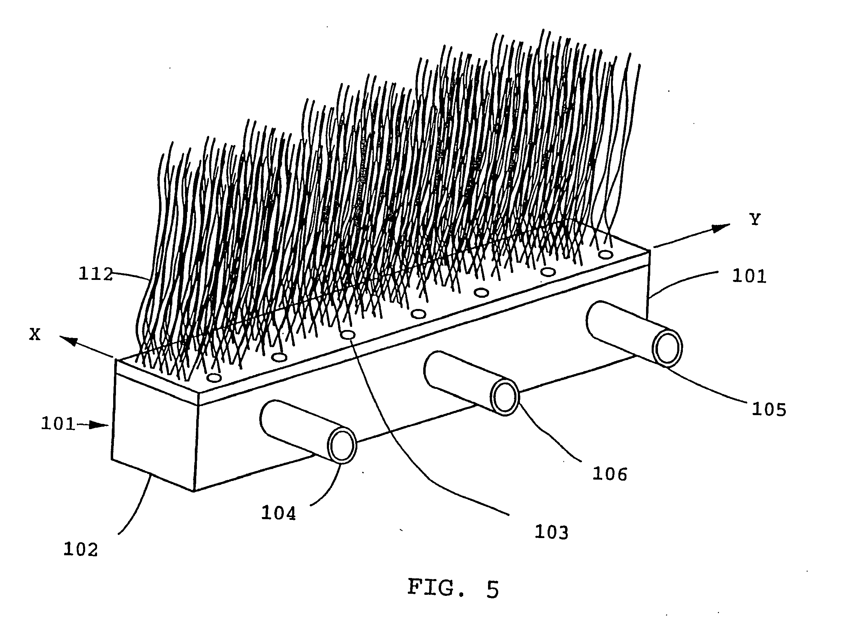

Alternatively, to avoid securing the pan to the header with a gasketing means, and, to avoid positioning one or more gas-distribution manifolds in an optimum location near the base of the skein fibers after a skein is made, the manifolds are formed integrally with a header. Referring to Fig 5 there is illustrated in perspective view an "integral single skein" 100 having an integral finished header 101 and permeate pan 102 with a permeate withdrawal nipple 106, and fitted with vertical air-tubes 103 which are to be embedded in the finished header. The air-tubes are preferably manifolded on either side of the skein fibers, to feeder air-tubes 104 and 105 which are snugly inserted through grommets in the walls of the pan. The permeate nipple 106 is then plugged, and a stack of arrays is held vertically in the pan in which a fugitive lamina is formed embedding both the ends of the fibers and the lower portion of the vertical air-tubes 103. A fixing lamina is then formed over the fugitive lamina, embedding the fibers to form a fixing lamina through which protrude the open ends of the air-tubes 103. The fugitive lamina is then melted and withdrawn through the nipple 106. In operation, permeate collects in the permeate pan and is withdrawn through nipple 106.

Fig 6 illustrates a cross-section of an embodiment of the invention which comprises an integral single skein 110 with another integral finished header 101 having a thickness L1-L2, but without a cushioning lamina, formed in a procedure similar to that described hereinabove. A permeate pan 120 with outwardly flared sides 120' and transversely spaced-apart through-apertures therein, is prefabricated between side walls 111 and 112 so the pan is spaced above the bottom of the reservoir.

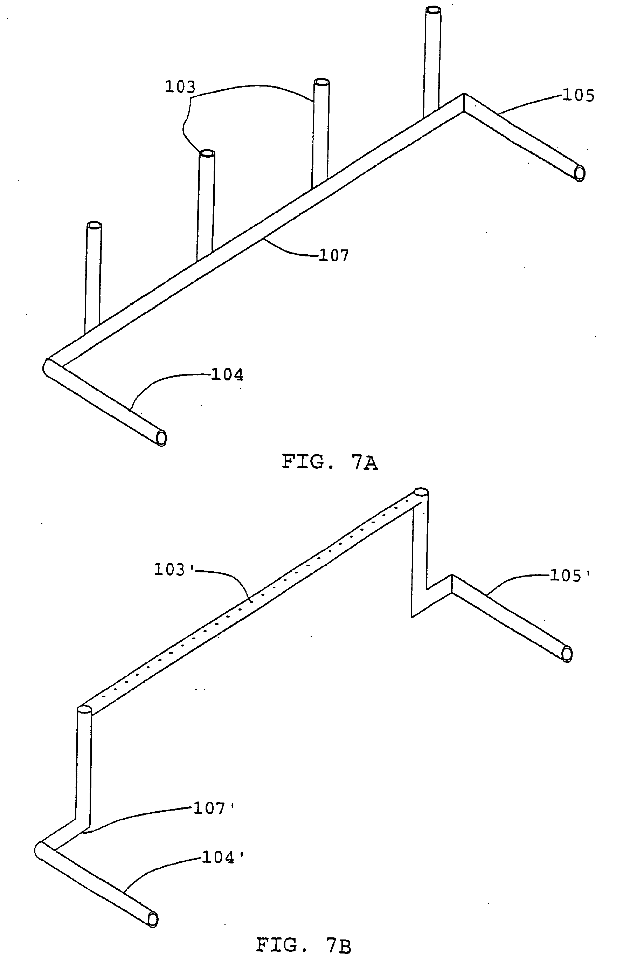

A pair of air-manifolds 107 such as shown in Figs 7A or 7B, is positioned and held in mirror-image relationship with each other adjacent the permeate pan 120, with the vertical air-tubes 103 protruding through the apertures in sides 120', and the ends 104 and 105 protrude from through-passages in the vertical walls on either side of the permeate pan. Permeate withdrawal nipple 106 (Fig 6) is first temporarily plugged. The stack of strips 15 is positioned between air-tubes 103, vertically in the pan 120 which is filled to level L1 to form a fugitive lamina, the level being just beneath the lower edges of the strips 15 which will not be removed. When solidified, the fugitive lamina embeds the terminal portions of the fibers 12 and also fills permeate tube 106. Then the second liquid is poured over the upper surface of the fugitive lamina until the liquid covers the strips 15 but leaves the upper ends of the air-tubes 103 open. The second liquid is then cured to form the fixing lamina of the composite header which is then heated to remove the fugitive material through the permeate nozzle 106 after it is unplugged.

Fig 7A schematically shows in perspective view, an air-manifold 107 having vertical air-tubes 103 rising from a transverse header-tube which has longitudinally projecting feeder air-tubes 104 and 105. The bore of the air-tubes which may be either "fine bubble diffusers", or "coarse bubble diffusers", or "aerators", is chosen to provide bubbles of the desired diameter under operating conditions, the bore typically being in the range from 0.1 mm to 5 mm. Bubbles of smaller diameter are preferably provided with a perforated transverse tube 103' of an air-manifold 107' having feeder air-tubes 104' and 105', illustrated in Fig 7B. In each case, the bubbles function as a mechanical brush.

The skein fibers for the upper header of the skein are potted in a manner analogous to that described above in a similar permeate pan to form a finished header, except that no air manifolds are inserted.

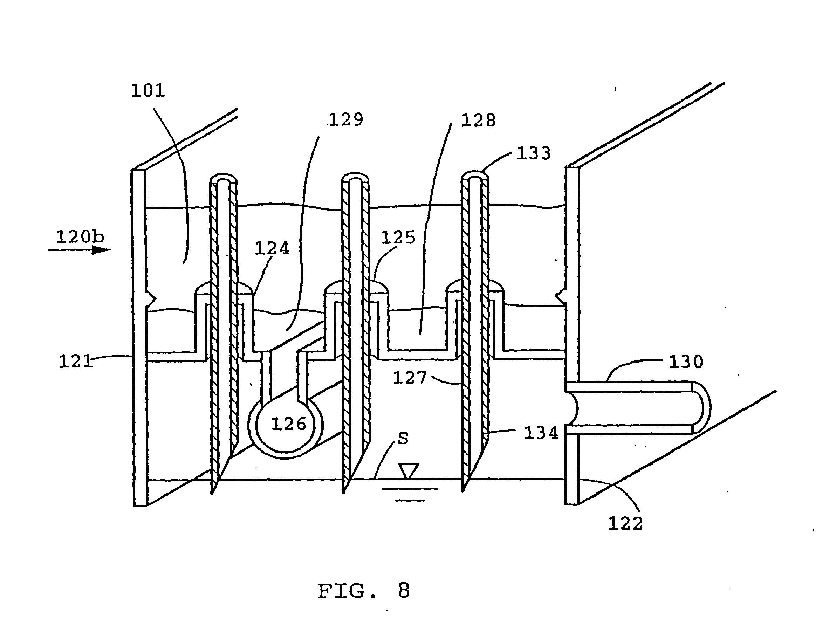

Referring to Fig 8 there is schematically illustrated, in a cross-sectional perspective view, an embodiment of the invention in which a bank of two skeins is potted in a single integral finished header enclosure, referred to generally by reference numeral 120b. The term "header enclosure" is used because its side walls 121 and 122, and end walls (not shown) enclose a plenum in which air is introduced. Instead of a permeate pan, permeate is collected from a permeate manifold which serves both skeins. Another similar upper enclosure 120u (not shown), except that it is a flat-bottomed channel-shaped pan (inverted for use as the upper header) with no air-tubes molded in it, has the opposed terminal portions of all the skein fibers potted in the pan. For operation, both the lower and upper enclosures 120b and 120u, with their skein fibers are lowered into a reservoir of the substrate to be filtered. The side walls 121 and 122 need not rest on the bottom of the reservoir, but may be mounted on a side wall of the reservoir.

The side walls 121 and 122 and end walls are part of an integrally molded assembly having a platform 123 connecting the walls, and there are aligned multiple risers 124 molded into the platform. The risers resemble an inverted test-tube, the diameter of which need only be large enough to have an air-tube 127 inserted through the top 125 of the inverted test-tube. As illustrated, it is preferred to have "n + 1" rows of air-tubes for "n" stacks of arrays to be potted. Crenelated platform 123 includes risers 124 between which lie channels 128 and 129. Channels 128 and 129 are each wide enough to accept a stack of arrays of fibers 12, and the risers are wide enough to have air-tubes 127 of sufficient length inserted therethrough so that the upper open ends 133 of the air-tubes protrude from the upper surface of the fixing material 101. The lower ends 134 of the air-tubes are sectioned at an angle to minimize plugging, and positioned above the surface S of the substrate. The channel 129 is formed so as to provide a permeate withdrawal tube 126 integrally formed with the platform 123. Side wall 122 is provided with an air-nipple 130 through which air is introduced into the plenum formed by the walls of the enclosure 120b, and the surface S of substrate under the platform 123. Each stack is potted as described in relation to Fig 6 above, most preferably by forming a composite header of fugitive PEG wax and epoxy resin around the stacks of arrays positioned between the rows of risers 124, making sure the open ends of the air-tubes are above the epoxy fixing material, and melting out the wax through the permeate withdrawal tube 126. When air is introduced into the enclosure the air will be distributed through the air-tubes between and around the skeins.

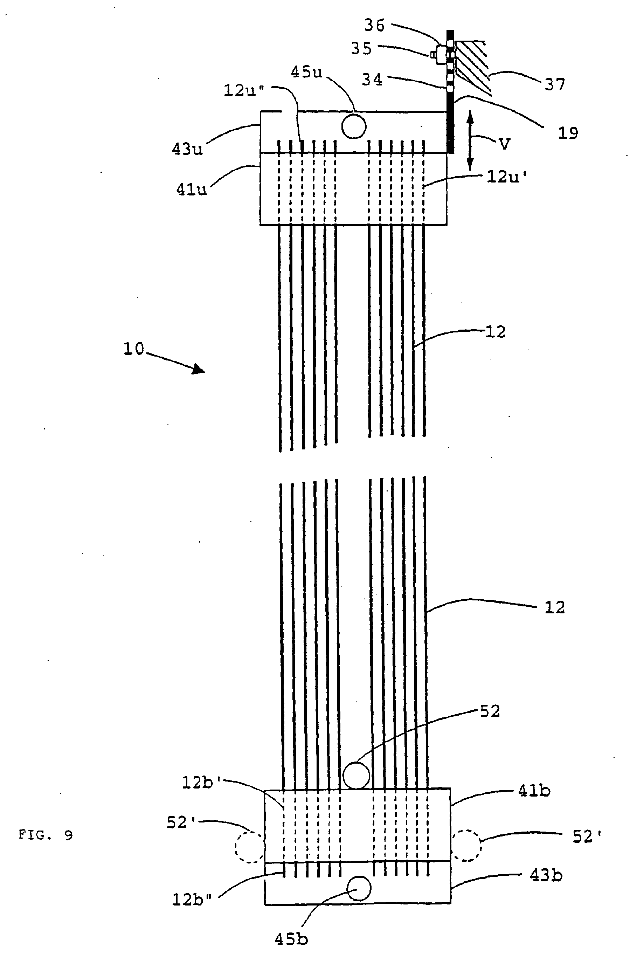

Referring to Fig 9 there is shown a schematic illustration of a skein having upper and lower headers 41u and 41b respectively, and in each, the protruding upper and lower ends 12u" and 12b" are evidence that the face of the header was not cut to expose the fibers. The height of the contiguous intermediate portions 12u' and 12b' respectively, corresponds to the cured depth of the fixing material.

It will now be evident that the essential feature of the foregoing potting method is that a fugitive lamina is formed which embeds the openings of the terminal portions of the fibers before their contiguous intermediate portions 12u' and 12u" and 12b' and 12b" are fixed respectively in a fixing lamina of the header. An alternative choice of materials is the use of a fugitive potting compound which is soluble in a non-aqueous liquid in which the fixing material is not soluble. Still another choice is to use a water-insoluble fugitive material which is also insoluble in non-aqueous liquids typically used as solvents, but which fugitive material has a lower melting point than the final potting material which may or may not be water-soluble.

The fugitive material is inert relative to both, the material of the fibers as well as the final potting material to be cast, and the fugitive material and fixing material are mutually insohible. Preferably the fugitive material forms a substantially smooth-surfaced solid, but it is critical that the fugitive material be at least partially cured, sufficiently to maintain the shape of the header, and remain a solid above a temperature at which the fixing material is introduced into the header mold. The fugitive lamina is essentially inert and insoluble in the final potting material, so that the fugitive lamma is removably adhered to the fixing lamina.

The demolded header is either heated or solvent extracted to remove the fugitive lamina. Typically, the fixing material is cured to a firm solid mass at a first curing temperature no higher than the melting point or Tg of the fugitive lamina, and preferably at a temperature lower than about 60°C; the firm solid is then post-cured at a temperature high enough to melt the fugitive material but not high enough to adversely affect the curing of the fixing material or the properties of the fibers. The fugitive material is removed as described hereinafter, the method of removal depending upon the fugitive material and the curing temperature of the final potting material used.

Referring further to Fig 2, the header 11 has front and rear walls defined by vertical (z-axis) edges 11' and longitudinal (x-axis) edges 13'; side walls defined by edges 11' and transverse (y-axis) edges 13"; and a base 13 defined by edges 13' and 13".

The collection pan 20 is sized to snugly accommodate the base 13 above a permeate collection zone within the pan. This is conveniently done by forming a rectangular pan having a base 23 of substantially the same length and width dimensions as the base 13. The periphery of the pan 20 is provided with a peripheral step as shown in Fig 2A, in which the wall 20' of the pan terminates in a step section 22, having a substantially horizontal shoulder 22" and a vertical retaining wall 22'.

Fig 2B is a bottom plan view of the lower face of header 13 showing the open ends of the fibers 12' prevented from touching each other by potting resin. The geometrical distribution of fibers provides a regular peripheral boundary 14 (shown in dotted outline) which bounds the peripheries of the open ends of the outermost fibers.

Permeate flows from the open ends of the fibers onto the base 23 of the pan 20, and flows out of the collection zone through a permeate withdrawal conduit 30 which may be placed in the bottom of the pan in open flow communication with the inner portion of the pan. When the skein is backwashed, backwashing fluid flows through the fibers and into the substrate. If desired, the withdrawal conduit may be positioned in the side of the pan as illustrated by conduit 30'. Whether operating under gravity alone, or with a pump to provide additional suction, it will be apparent that a fluid-tight seal is necessary between the periphery of the header 11 and the peripheral step 22 of the pan 20. Such a seal is obtained by using any conventional means such as a suitable sealing gasket or sealing compound, typically a polyurethane or silicone resin, between the lower periphery of the header 11 and the step 22. As illustrated in Fig 2, permeate drains downward, but it could also be withdrawn from upper permeate port 45u in the upper permeate pan 43u (see Fig 9).

Referring to Figs 9 and 2A, six rows of fibers 12 are shown on either side of a gas distribution line 52 which traverses the length of the rows along the base of the fibers. The potted terminal end portions 12b" open into permeate pan 43b. Because portions 12u' and 12b' of individual fibers 12 are potted, and the fibers 12 are preferably from 1% to 2% longer than the fixed distance between upper and lower headers 41u and 41b, the fibers between opposed headers are generally parallel to one another, but are particularly parallel near each header. Also held parallel are the terminal end portions 12u" and 12b" of the fibers which protrude from the headers with their open ends exposed. The fibers protrude below the lower face of the bottom header 41b, and above the upper face of the upper header 41u. The choice of fiber spacing in the header will determine packing density of the fibers near the headers, but fiber spacing is not a substantial consideration because spacing does not substantially affect flux during operation.

Since the length of fibers tends to change while in service, the extent of the change depending upon the particular composition of the fibers, and the spacing between the upper and lower headers is critical, it is desirable to mount the headers so that one is adjustable in the vertical direction relative to the other, as indicated by the arrow V. This is conveniently done by attaching the pan 43u to a plate 19 having vertically spaced apart through-passages 34 through which a threaded stud 35 is inserted and secured with a nut 36. Threaded stud 35 is in a fixed mounting block 37.

The density of fibers in a header is preferably chosen to provide the maximum membrane surface area per unit volume of substrate without adversely affecting the circulation of substrate through the skein. A gas-distribution means 52 such as a perforated air-tube, provides air within the skein so that bubbles of gas (air) rise upwards while clinging to the outer surfaces of the fibers, thus efficiently scrubbing them. If desired, additional air-tubes 52' may be placed on either side of the skein near the lower header 41b, as illustrated in phantom outline, to provide additional air-scrubbing power. Whether the permeate is withdrawn from the upper header through port 45u or the lower header through port 45b, or both, depends upon the particular application, but in all instances, the fibers have a substantially vertical orientation.

The vertical skein is deployed in a substrate to present a generally vertical profile, but has no structural shape. Such shape as it does have changes continuously, the degree of change depending upon the flexibility of the fibers, their lengths, the overall dimensions of the skein, and the degree of movement imparted to the fibers by the substrate and also by the oxygen-containing gas from the gas-distribution means.

Referring to Fig 10 there is illustrated a typical assembly referred to as a "wall-mounted bank" which includes at least two side-by-side skeins, indicated generally by reference numerals 40 and 40' with their fibers 42 and 42'; fibers 42 are potted in upper and lower headers 41u and 41b respectively; and fibers 42' in headers 41u' and 41b'; headers 41u and 41b are fitted with permeate collecting means 46u and 46b respectively; headers 41u' and 41b' are fitted with permeate collecting means 46u' and 46b' respectively; and, the skeins share a common gas-distribution means 50. A "bank" of skeins is typically used to retrofit a large, deep tank from which permeate is to be withdrawn using a vacuum pump. In a large reservoir, several banks of skeins may be used in side-by-side relationship within a tank. Each skein includes multiple rows (only one row is shown) of fibers 42 and 42' in upper headers 41u and 41u', and lower headers 41b and 41b' respectively, and arms 51 and 51' of gas-distribution means 50 are disposed between the lower headers 41b and 41b', near their bases. The upper headers 41u and 41u' are mounted by one of their ends to a vertical interior surface of the wall W of a tank, with mounting brackets 53 and 53' and suitable fastening means such as bolts 54. The wall W thus functions as a spacer means which fixes the distance between the upper and lower headers. Each upper header is provided with a permeate collection pan 43u and 43u', respectively, connected to permeate withdrawal conduits 45u and 45u' and manifolded to permeate manifold 46u through which permeate being filtered into the collection pans is continuously withdrawn. Each header is sealingly bonded around its periphery, to the periphery of each collection pan.

The skein fibers (only one array of which is shown for clarity) shown in this perspective view have an elongated rectangular parallelpiped shape the sides of which are irregularly shaped when immersed in a substrate, because of the random side-to-side displacement of fibers as they sway. An elongated rectangular parallelpiped shape is preferred since it permits a dense packing of fibers, yet results in excellent scrubbing of the surfaces of the fibers with bubbles. With this shape, a skein may be formed with from 10 to 50 arrays of fibers across the longitudinal width 'w' of the headers 41u, 41b, and 41u', 41b' with each array having fibers extending along the transverse length '1' of each header. Air-tubes on either side of a skein effectively cleanse the fibers if there are less than about 30 arrays between the air-tubes. A skein having more than 30 arrays is preferably also centrally aerated as illustrated by the air-tube 52 in Fig 9.

Thus, if there are about 100 fibers closely spaced-apart along the transverse length '1' of an array, and there are 25 arrays in a skein in a header of longitudinal width 'w', then the opposed terminal end portions of 2500 fibers are potted in headers 41u and 41b. The open ends of all fibers in headers 41b and 41b' point downwards into collection zones in collection pans 43b and 43b' respectively, and those of all fibers in headers 41u and 41u' point upwards into collection zones in collection pans 43u and 43u' respectively. Withdrawal conduits 45u and 45u' are manifolded to permeate manifold 46u through which permeate collecting in the upper collection pans 43u and 43u' is typically continuously withdrawn. If the permeate flow is high enough, it may also be withdrawn from the collection pans 43b and 43b' through withdrawal conduits 45b and 45b' which are manifolded to permeate manifold 46b. When permeate is withdrawn in the same plane as the permeate withdrawal conduits 45u, 45u' and manifold 46u, and the transmembrane pressure differential of the fibers is in the range from 35 - 75 kPa (5 - 10 psi), manifold 46u may be connected to the suction side of a centrifugal pump which will provide adequate NPSH (net positive suction head).

In general, the permeate is withdrawn from both the upper and lower headers, until the flux declines to so low a. level as to require that the fibers be backwashed. The skeins may be backwashed by introducing a backwashing fluid through the upper permeate collection manifold 46u, and removing the fluid through the lower manifold 46b. Typically, from 3 to 30 skeins may be coupled together for internal fluid communication with one and another through the headers, permeate withdrawal means and the fibers; and, for external fluid communication with one another through an air manifold. Since the permeate withdrawal means is also used for backflushing it is generally referred to as a 'liquid circulation means', and as a permeate withdrawal means only when it is used to withdraw permeate.

When deployed in a substrate containing suspended and dissolved organic and inorganic matter, most fibers of organic polymers remain buoyant in a vertical position. The fibers in the skein are floatingly buoyed in the substrate with the ends of the fibers anchored in the headers. This is because (i) the permeate is essentially pure water which has a specific gravity less than that of the substrate, and most polymers from which the fibers are formed also have a specific gravity less than 1, and, (ii) the fibers are buoyed by bubbles which contact them. Fibers made from ceramic, or, glass fibers are heavier than water.

Adjacent the skeins, an air-distribution manifold 50 is disposed below the base of the bundle of fibers, preferably below the horizontal plane through the horizontal center-lines of the headers. The manifold 50 is preferably split into two foraminous arms 51 and 51' adjacent the bases of headers 41b and 41b' respectively, so that when air is discharged through holes in each portion 51 and 51', columns of bubbles rise adjacent the ends of the fibers and thereafter flow along the fibers through the skeins. If desired, additional portions (not shown) may be used adjacent the bases of the lower headers but located on the outside of each, so as to provide additional columns of air along the outer surfaces of the fibers.

The type of gas (air) manifold is not narrowly critical provided it delivers bubbles in a preferred size range from about 1 mm to 25 mm, measured within a distance of from 1 cm to 50 cm from the through-passages generating them. If desired, each portion 51 and 51' may be embedded in the upper surface of each header, and the fibers potted around them, making sure the air-passages in the portions 51 and 51' are not plugged with potting compound. If desired, additional arms of air-tubes may be disposed on each side of each lower header, so that fibers from each header are scrubbed by columns of air rising from either transverse side.

The air may be provided continuously or intermittently, better results generally being obtained with continuous air flow. The amount of air provided depends upon the type of substrate, the requirements of the type of microorganisms, if any, and the susceptibility of the surfaces of the fibers to be plugged.

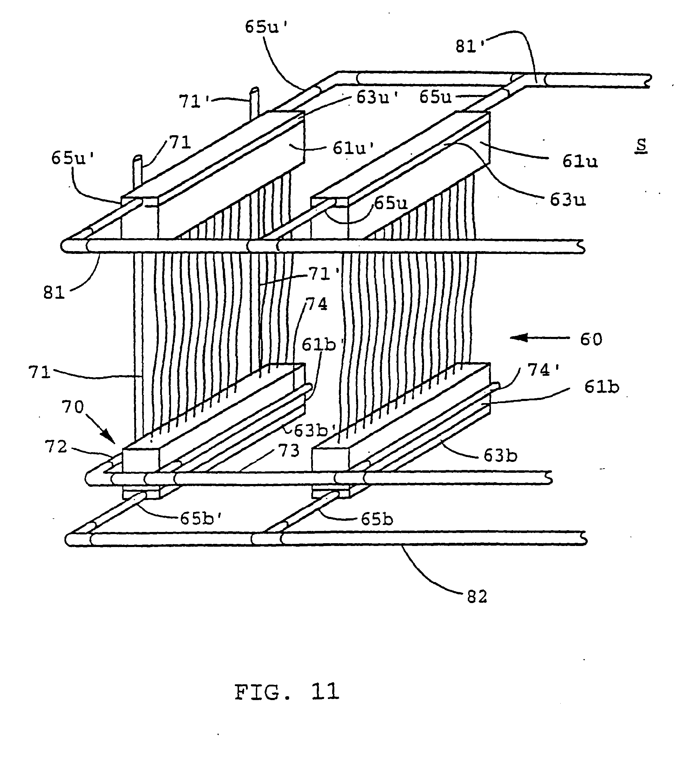

Referring to Fig 11, there is schematically illustrated another assembly, referred to as a "stand-alone bank" of skeins, two of which are referenced by numeral 60. The bank is referred to as being a "stand-alone" because the spacer means between headers is supplied with the skeins, usually because mounting the skeins against the wall of a reservoir is less effective than placing the bank in spaced-apart relationship from a wall. In other respects, the bank 60 is analogous to the wall-mounted bank illustrated in Fig 10.

Each bank 60 with fibers 62 (only a single row of the multiple, regularly spaced apart generally vertical arrays is shown for the sake of clarity) is deployed between upper and lower headers 61u and 61b in a substrate 'S'. The lower headers rest on the floor of the reservoir. The upper headers are secured to rigid vertical air tubes 71 and 71' through which air is introduced into a tubular air manifold identified generally by reference numeral 70. The manifold 70 includes (i) the vertical tubular arms 71 and 71'; (ii) a lower transverse arm 72 which is perforated along the length of the lower header 61b' and secured thereto; the arm 72 communicates with longitudinal tubular arm 73, and optionally another longitudinal arm 73' (not shown) in mirror-image relationship with arm 73 on the far side of the headers; and (iii) transverse arms 74 and 74' in open communication with 72 and 73; arms 74 and 74' are perforated along the visible transverse faces of the headers 61b an 61b', and 74 and 74' may communicate with tubular arm 73' if it is provided. The vertical air-tubes 71 and 71' conveniently provide the additional function of a spacer means between the first upper header and the first lower header, and because the remaining headers in the bank are also similarly (not shown) interconnected by rigid conduits, the headers are maintained in vertically and transversely spaced-apart relationship. Since all arms of the air manifold are in open communication with the air supply, it is evident that uniform distribution of air is facilitated.

As before, headers 61u and 61u' are each secured in fluid-tight relationship with collection zones in collection pans 63u and 63u' respectively, and each pan has withdrawal conduit 65u and 65u' which are manifolded to longitudinal liquid conduits 81 and 81'. Analogonsly, headers 61b and 61b' are each secured in fluid-tight relationship with collection zones in collection pans 63b and 63b' respectively, and each pan has withdrawal conduits 65b and 65b' which are manifolded to longitudinal conduits 82 and 82' (not shown). As illustrated, withdrawal conduits are shown for both the upper and the lower headers, and both fore and aft the headers. In many instances, permeate is withdrawn from only an upper manifold which is provided on only one side of the upper headers. A lower manifold is provided for backwashing. Backwashing fluid is typically flowed through the upper manifold, through the fibers and into the lower marrifold. The additional manifolds on the aft ends of the upper and lower headers not only provides more uniform distribution of backwashing fluid but support for the interconnected headers. It will be evident that, absent the aft interconnecting upper conduit 81', an upper header such as 61u will require to be spaced from its lower header by some other interconnection to header 61u' or by a spacer strut between headers 61u and 61b.

In the best mode illustrated, each upper header is provided with rigid PVC tabular nipples adapted to be coupled with fittings such as ells and tees to the upper conduits 81 and 81' respectively. Analogously, each lower header is connected to lower conduits 82 and 82' (not shown) and/or spacer struts are provided to provide additional rigidity, depending upon the number of headers to be interconnected. Permeate is withdrawn through an upper conduit, and all piping connections, including the air connection, are made above the liquid level in the reservoir.

The length of fibers (between headers) in a skein is generally chosen to obtain efficient use of an economical amount of air, so as to maintain optimum flux over a long period of time. Other considerations include the depth of the tank in which the bank is to be deployed, the positioning of the liquid and air manifolds, and the convection patterns within the tank, inter alia.

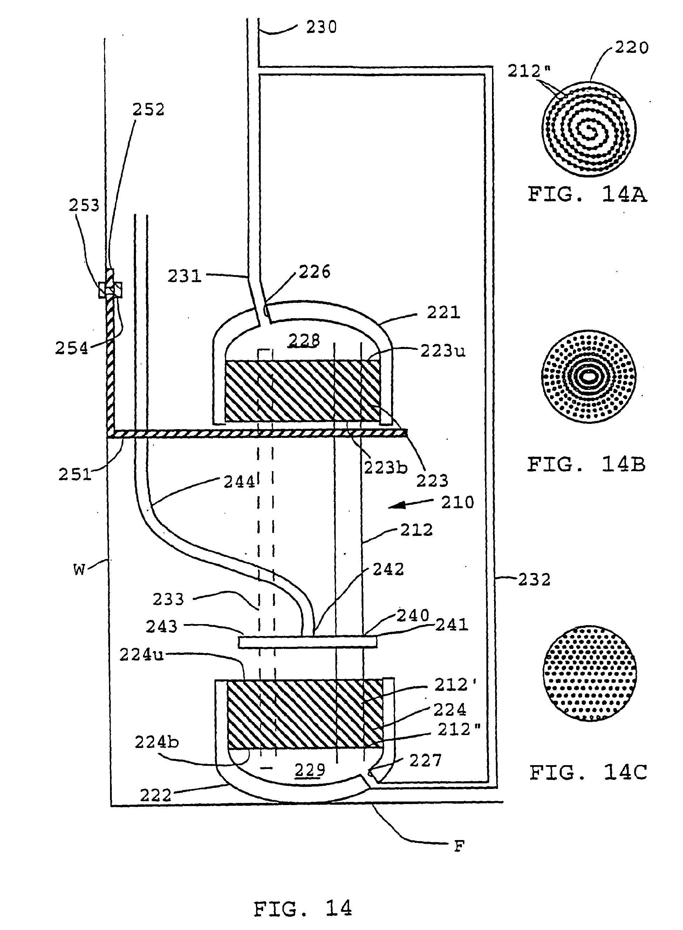

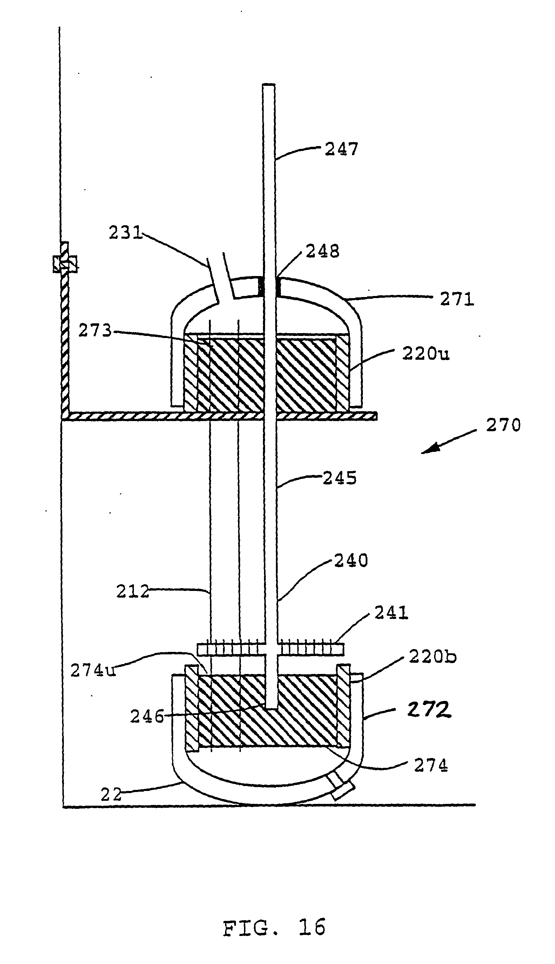

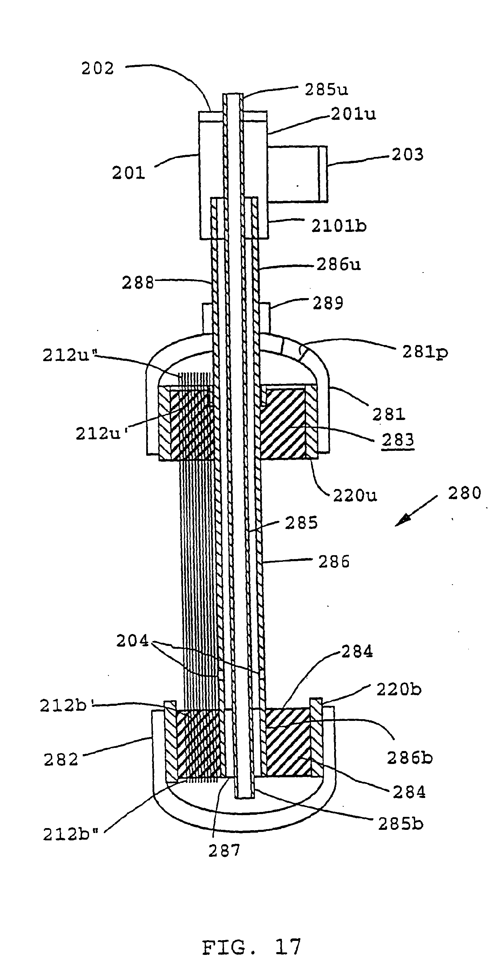

Figs 14 - 17 specifically illustrate preferred cylindrical vertical skeins wherein Figs. 16 and 17 are embodiments of the invention. Referring to Fig 14 there is schematically illustrated, in cross-sectional elevational view a vertical cylindrical skein 210 resting on the floor F of a tank, the skein comprising a pair of similar upper and lower cylindrical end-caps 221 and 222 respectively, which serve as permeate collection pans. Bores 226 and 227 in the upper and lower end-caps have permeate withdrawal tubes 231 and 232, respectively, connected in mud-tight engagement therein. Permeate withdrawn through the tubes is combined in a permeate withdrawal manifold 230. Each end-cap has a finished upper/lower header formed directly in it, upper header 223 being substantially identical to lower header 224. Each header is formed by potting fibers 212 in a potting resin such as a polyurethane or an epoxy of sufficient stiffness to hold and seal the fibers under the conditions of use. A commercially available end-cap for poly(vinyl chloride) "PVC" pipe is most preferred; for large surface area skeins, larger headers are provided by commercially available glass fiber reinforced end-caps for cylindrical tanks. It is essential that the fibers are not in contact with each other, but spaced apart by cured resin. It is also essential that the cured resin adhere to and seal the lower portions 212' of each of the fibers against leakage of fluid under operating conditions of the skein. Visual confirmation of a seal is afforded by the peripheries of the fibers being sealed at the upper (fore) and lower (aft) faces 223u and 223b respectively of the upper header 223, and the fore and aft faces 224u and 224b respectively of the lower header 224. A conventional finished header may be used in which the ends 212" of the fibers would be flush (in substantially the same plane) as the lower face 224b. In the best mode, though not visible through an opaque end-cap, the open ends 212" of the fibers protrude from the headers' lower (aft or bottom) face 224b.

The finished upper header 223 (fixing lamina) is left adhered to the periphery of the end-cap 221 when the fugitive lamina is removed through bore 226 in the upper header, and analogously, the finished lower header 224 is left adhered to the periphery of the end-cap 222 when the fugitive lamina is removed through a bore 227.

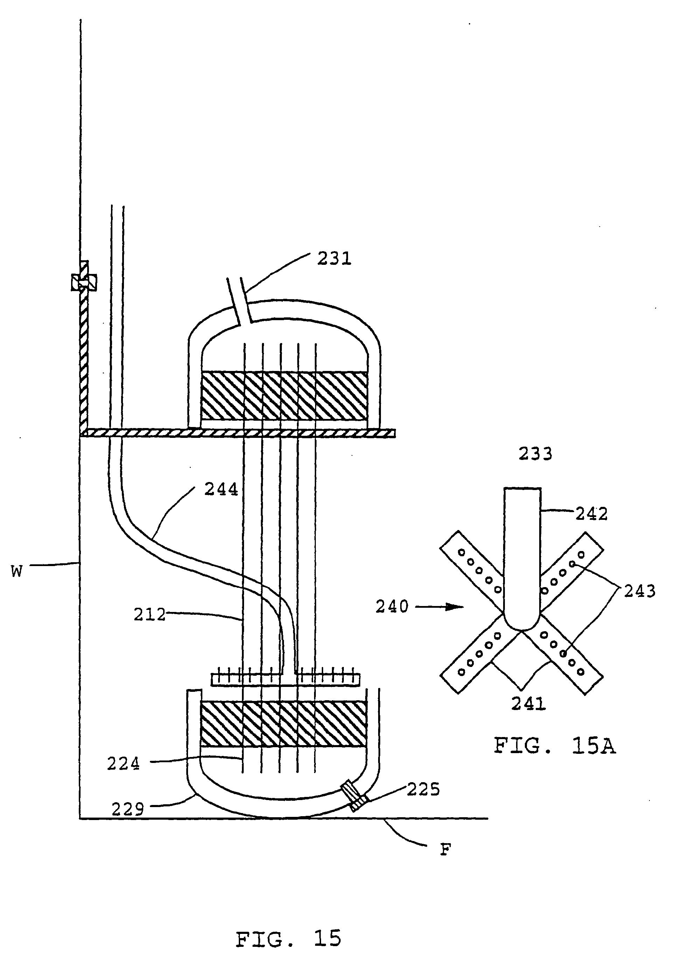

Skein fibers 212 are preferably in arrays bundled in a geometric configuration such as a spiral roll. A header is formed in a manner analogous to that described in relation to Fig 4, by potting the lower end of the spiral roll. Fig 14A, showing a bottom plan view of the aft face 224b of header 224, illustrates the spiral pattern of openings in the ends 212" of the fibers. It is preferred, before an array is rolled into a spiral, to place a sparger 240 (shown in Fig 15A) with a rigid air-supply tube 242 in the array so that upon forming a spiral roll the air-supply tube is centrally axially held within the roll.

Illustrated in Fig 14B is a bottom plan view of aft face 224b with another configuration, wherein a series of successively larger diameter circular arrays are formed, each a small predetermined amount larger than the preceding one, and the arrays secured, preferably adhesively, one to the next, near their upper and lower peripheries respectively to form a dense cylindrical mass of fibers. In such a mass of fibers, referred to as a series of annular rings, each array is secured both to a contiguous array having a next smaller diameter, as well as to a contiguous array having a next larger diameter, except for the innermost and outermost arrays which have the smallest and largest diameters, respectively. The pattern in header 224 illustrates the ends 212" of the fibers after the nested arrays are potted.

Illustrated in Fig 14C is a bottom plan view of lower (aft) face 224b with phual arrays arranged chord-like within the header 224. Arrays are formed on pairs of strips, each having a length, corresponding to its position as a chord within a potting ring in which the skein fibers are to be potted. That is, each array is formed on strips of diminishing width, measured from the central array which is formed on a strip having a width slightly less than the inner diameter of the potting ring in which the stack is to be potted. The arrays are stacked within the ring, the widest array corresponding in position to the diameter of the ring. For a chosen fiber 212, the larger the surface area required in a skein, the greater the number of fibers in each array, the bigger the diameter of the ring, and the wider each chord-like array. The plural arrays are preferably adhered one to the other by coating the surfaces of fibers with adhesive prior to placing a strip of the successive array on the fibers. Alternatively, the bundled arrays may be held with a rubber band before being inserted in the potting ring. The resulting chord-like pattern in header 224 illustrates the ends 212" of the fibers after the nested arrays are potted.

A detail of a sparger 240 is provided in Fig 15A. The star-shaped sparger 240 having radially outwardly extending tubular arms 241 and a central supply stub 242, supplies air which is directed into the tubular arms and discharged into the substrate through air passages 243 in the walls of the arms. An air feed tube 244 connected to the central supply stub 242 provides air to the sparger 240. The lower end of the central stub 242 is provided with short projecting nipples 245 the inner ends of which are brazed to the stub. The outer ends of the nipples are threaded. The central stub and nipples are easy to insert into the center of the mass of skein fibers. When centrally positioned, arms 241 which are threaded at one end, are threadedly secured to the outer ends of the nipples.

As illustrated in Fig 14, lower end-cap 222 rests on the floor F of a tank, near a vertical wall W to which is secured a vertical mounting strut 252 with appropriate fastening means such as a nut 253 and bolt 254. A U-shaped bracket 251 extends laterally from the base of the mounting strut 252. The arms of the U-shaped bracket support the periphery of upper end-cap 221, and to ensure that the end-cap stays in position, it is secured to the U-shaped bracket with a right angle bracket and fastening means (not shown). A slot in mounting strut 252 permits the U-shaped bracket to be raised or lowered so that the desired distance between the opposed faces 223b and 224u of the upper and lower headers respectively is less than the length of any potted fiber, measured between those faces, by a desired amount. Adjustability is particularly desirable if the length of the fibers tends to change during service.

As illustrated in Fig 14, if it is desirable to withdraw permeate from only the upper tube 231, a permeate connector tube 233 (shown in phantom outline), is inserted within the mass of skein fibers 212 through the headers 223 and 224, connecting the permeate collection zone 229 in the lower end-cap in open fluid communication with the permeate collection zone 228 in the upper end-cap; and, bore 227 is plugged with a plug 225 as shown in Fig 15. Since, under such circumstances, it does not matter if the lower ends 212" of the fibers are plugged, and permeate collection zone 229 serves no essential function, the zone 229 may be filled with potting resin.

Referring to Fig 16 there is illustrated an embodiment of the invention comprising a skein 270 with upper and lower end-caps 271, 272 in which are sealed upper and lower ring headers formed in upper and lower rings 220u and 220b respectively, after the fibers in the skein are tested to determine if any is defective. A rigid air-supply tube 245 is positioned in the spiral roll as described above, and the lower end of the roll is potted forming a lower finished header 274 in which the lower end 246 of the air-supply tube is potted, fixing the position of the arms 241 and air passages 243 of the sparger just above the upper face 274u of the header 274.

In an analogous manner, an upper header 273 is formed in ring 220u and upper end 247 of air-supply tube 245 is inserted through an axial bore 248 within upper end-cap 271 which is slipped over the ring 220u the outer periphery of which is coated with a suitable adhesive, to seal the ring 220u in the end-cap 271. The periphery of the upper end 247 is sealed in the end cap 271 with any conventional sealing compound.

Referring to Fig 17 there is schematically illustrated another embodiment of the invention comprising of a skein 280 in which rigid permeate tube 285 is held concentrically within a rigid air-supply tube 286 which is potted axially within skein fibers 212 held between opposed upper and lower headers 283 and 284 in upper and lower rings 220u and 220b which are in turn sealed in end-caps 281 and 282 respectively. For ease of manufacture, the lower end 285b of permeate tube 285 is snugly fitted and sealed in a bushing 287. The bushing 287 and end 285b are then inserted in the lower end 286b of the air supply tube 286 and sealed in it so that the annular zone between the outer surface of permeate tube 285 and the inner surface of air supply tube 286 will duct air to the base of the fibers but not permit permeate to enter the annular zone. The air supply tube is then placed on an array and the array is rolled into a spiral which is held at each end with rubber bands. The lower end of the roll is placed in a ring 220b and a lower ring header is formed with a finished header 284 as described above. It is preferred to use a relatively stiff elastomer having a hardness in the range from 50 Shore A to about 20 Shore D, and most preferred to use a polyurethane having a hardness in the range from 50 Shore A to about 20 Shore D, measured as set forth in ASTM D-790, such as PTU-921 available from Canadian Poly-Tech Systems. To form the upper finished header 283 the air supply tube is snugly inserted through an O-ring held in a central bore in a plate such as used in Fig 5, to avoid loss of potting resin from the ring, and the fugitive resin and finishing resins poured and cured, first one then the other, in the ring. Lower finished header 284 is formed with intermediate portions 212b' embedded, and terminal portions 212b" protruding from the header's aft face. Upper finished header 283 is formed with intermediate portions 212u' embedded, and terminal portion 212u" protruding from the header's fore face. After the finished headers 283 and 284 are formed and the fibers checked for defects, the upper end 286u of the air supply tube 286 is inserted through a central bore 288 in upper end-cap 281 and sealed within the bore with sealing compound or a collar 289. Preferably the permeate tube 285, the air supply tube 286 and the collar 289 are all made of PVC so that they are easily cemented together to make leak-proof connections.

As shown, permeate may be withdrawn through the permeate tube 285 from the permeate collection zone in the lower end-cap 282, and separately from the upper end-cap 281 through permeate withdrawal port 281p which may be threaded for attaching a pipe fitting. Alternatively, the permeate port 281p may be plugged and permeate withdrawn from both end-caps through the permeate tube 285.

Upper end 285u of permeate tube 285 and upper end 286u of air supply tube 286 are inserted through a T-fitting 201 through which air is supplied to the air supply tube 286. The lower end 201b of one of the arms of the T 201 is slip-fitted and sealed around the air supply tube. The upper end 201u of the other arm is inserted in a reducing bushing 202 and sealed around the permeate tube. Air supplied to intake 203 of the T 201 travels down the annular zone between the permeate tube and the air supply tube and exits through opposed ports 204 in the lower portion of the air supply tube, just above the upper face 284u of the lower header 284. It is preferred to thread ports 204 to threadedly secure the ends of arms 241 to form a sparger which distributes air substantially uniformly across and above the surface 284u. Additional ports may be provided along the length of the vertical air supply tube, if desired.

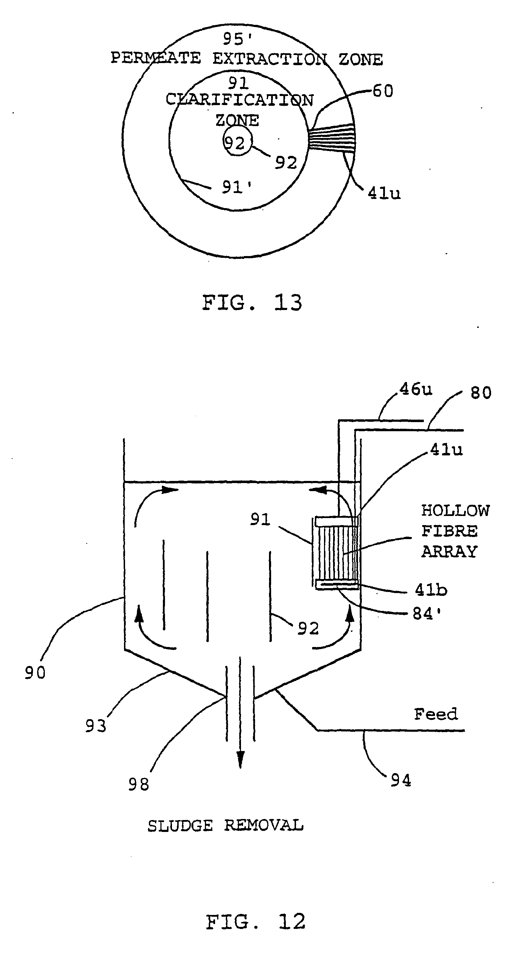

In another variation, a bioreactor is retrofitted with plural banks of skeins schematically illustrated in the elevational view shown in Fig 12, and the plan view shown in Fig 13. The clarifier tank is a large circular tank 90 provided with a vertical, circular outer baffle 91, a vertical circular inner baffle 92, and a bottom 93 which slopes towards the center (apex) for drainage of accumulating sludge. Alternatively, the baffles may be individual, closely spaced rectangular plates arranged in outer and inner circles, but continuous cylindrical baffles (shown) are preferred. Irrespective of which baffles are used, the baffles are located so that their bottom peripheries are located at a chosen vertical distance above the bottom. Feed is introduced through feed line 94 in the bottom of the tank 90 until the level of the substrate rises above the outer baffle 91.

A bank 60 of plural skeins 10, analogous to those in the bank depicted in Fig 10, each of which skeins is illustrated in Fig 9, is deployed against the periphery of the inner wall of the bioreactor with suitable mounting means in an outer annular permeate extraction zone 95' (Fig 13) formed between the circular outer baffle 91 and the wall of the tank 90, at a depth sufficient to submerge the fibers. A clarification zone 91' is defined between the outer circular baffle 91 and inner circular baffle 92. The inner circular baffle 92 provides a vertical axial passage 92' through which substrate is fed into the tank 90. The skeins form a dense curtain of fibers in radially extending, generally planar vertical arrays as illustrated in Fig 9, potted between upper and lower headers 41u and 41b. Permeate is withdrawn through manifold 46u and air is introduced through air-manifold 80, extending along the inner wall of the tank, and branching out with air-distribution arms between adjacent headers, including outer distribution arms 84' on either side of each lower header 41b at each end of the bank. The air manifold 80 is positioned between skeins in the permeate extraction zone 95' in such a manner as to have bubbles contact essentially the entire surface of each fiber which is continuously awash with bubbles. Because the fibers are generally vertical, the air is in contact with the surfaces of the fibers longer than if they were arcuate, and the air is used most effectively to maintain a high flux for a longer period of time than would otherwise be maintained.

It will be evident that if the tank is at ground level, there will be insufficient liquid head to induce a desirable liquid head under gravity alone. Without an adequate siphoning effect, a centrifugal pump may be used to produce the necessary suction. Such a pump should be capable of running dry for a short period, and of maintaining a vacuum on the suction side of from 25.5 cm (10") - 51 cm (20") of Hg, or -35 kPa (-5 psi) to -70 kPa (-10 psi). Examples of such pumps rated at 18.9 L/min (5 gpm) @ 15" Hg, are (i) flexible-impeller centrifugal pumps, e.g. Jabsco® #30510-2003; (ii) air operated diaphragm pumps, e.g. Wilden® M2; (iii) progressing cavity pumps, e.g. Ramoy® 3561; and (iv) hosepumps, e.g. Wankesha® SP 25.

### Example 1

Microfiltration of an activated sludge at 30°C having a concentration of 25 g/L total suspended solids (2.5% TSS) is carried out with a skein of polysulfone fibers in a pilot plant tank. The fibers are "air scrubbed" at a flow rate of 12 CFM (0.34 m³/min) with an incorporated coarse bubble diffuser generating bubbles in the range from about 5 mm to 25 mm in nominal diameter. The air is sufficient not only for adequate scrubbing butalso for the oxidation requirements of the biomass. The fibers have an o.d. of 1.7 mm, a wall thickness of about 0.5 mm, and a surface porosity in the range from about 20% to 40% with pores about 0.2µm in diameter. The skein which has 1440 fibers with a surface area of 12 m² is wall-mounted in the tank, the vertical spaced apart distance of the headers being about 1% less than the length of a fiber in the skein, providing slackness. The opposed ends of the fibers are potted in upper and lower headers respectively, each about 41 cm long and 10 cm wide. The fixing material of the headers is an epoxy having a hardness of about 70 Shore D with additional upper an lower laminae of softer polyurethane (about 60 Shore A and 30 Shore D respectively) above and below the epoxy lamina, and the fibers are potted to a depth sufficient to have their open ends protrude from the bottom of the header. The average transmembrane pressure differential is about 34.5 kPa (5 psi). Permeate is withdrawn through lines connected to the collection pan of each header with a pump generating about 34.5 kPa (5 psi) suction. Permeate is withdrawn at a permeability of about 0.7 Lm²h/kPa yielding about 4.8 L/min of permeate which has an average turbidity of < 0.8 NTU, which is a turbidity not discernible to the naked eye.

### Example 2

### Comparison of Operation of a Vertical Skein (ZW 72) in Different Orientations

In the following comparison, three pairs of identical skeins with equally slack fibers are variously positioned (as designated) above aerators in a bioreactor. Each pair is subjected to the same discharge of air through identical aerators. Rectangular but not square headers are chosen to determine whether there is a difference between each of two flat horizontal orientations, which difference would not exist in a horizontal skein with cylindrical headers. A pair of identical rectangular skeins, each having headers 41.66 cm (16.4 in) in length (x-axis), 10.16 cm (4 in) in width (y-axis) and 7.62 cm (3 in) in height (z-axis), in which are potted 1296 Zenon® MF200 microfiltration fibers presenting a nominal fiber surface area of 6.25 m², were tested in three different orientations in a bioreactor treating domestic wastewaters. The fibers used are the same as those used in Example 1 above. The distance between opposed faces of headers is 90 cm (35.4 in) which is about 2% less than the length of each fiber potted in those headers.

In a first test, the two (first and second) skeins were stacked laterally, each in the same direction along the longitudinal axis, with a 25 cm (1 in) thick spacer between the headers, the headers of each skein being in a horizontal flat orientation (area 41.66 cm x 7.62 cm) is spaced apart 7.62 cm (3 in) above the floor on which lies the aerators in the form of three side-by-side linear tubes with 3 mm (0.125") openings. The first skein which is directly above the aerators is therefore referred to as the "lower skein".

In a second test, the same first and second skeins are each rotated 90° about the longitudinal x-axis and placed contiguously one beside the other. In this "horizontal 90°" orientation (area defined by 10.16 cm X 7.62 cm) is spaced apart from the aerators as in the prior test.

In a third test, the first and second skeins are placed side-by-side in vertical orientations as shown in Fig 9 except there is no internal aerator.

Each test provides the fibers in each orientation with the identical amount of air. Permeate was withdrawn with a pump with a NPSH of 0.3 bar (10" of Hg). The conditions were held constant until it was observed that the flux obtained for each test was substantially constant, this being the equilibrium value. After this occurred, each skein was back pulsed for 30 sec with permeate every 5 minutes to maintain the flux at the equilibrium value. The test conditions for each of the above three runs were as follows:

| | | | |
|---|---|---|---|
| TSS in bioreactor | 8 g/L; | Temperature of biomass | 19°C |
| Flow rate of air | 0.2124 m³/min/skein; | Suction on fibers | 25.4 cm of Hg |

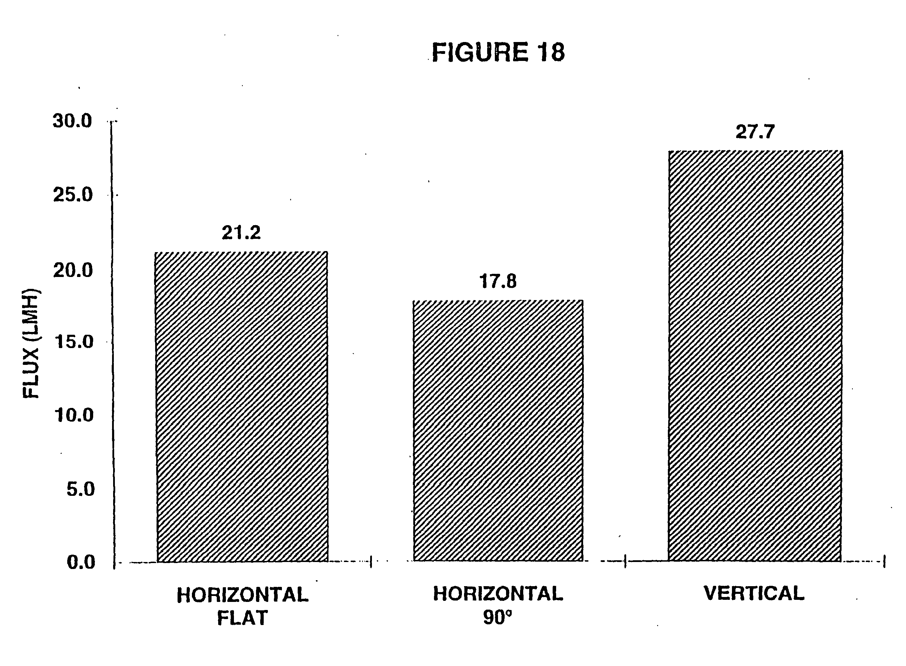

Fig 18 is a bar graph which shows the average flux over a 24 hr period for each orientation of the skein as follows:

| Orientation | Average flux L/m2/hr over 24 hr |
|---|---|
| Horizontal flat | 21.2 LMH |
| Horizontal 90° | 17.8 LMH |
| Vertical | 27.7 LMH |

This conclusively demonstrates that the vertical orientation of the skein fibers produces the highest overall flux.

### Example 3

### Comparison of Positions of Aerator Inside and Outside the Skein Fibers:

In this test the difference in flux is measured in a bioreactor treating wastewater contaminated with ethylene glycol, the difference depending upon how a single cylindrical vertical skein (ZW 172) having a nominal surface area of 16 m² is aerated with 3.5 L/min (7.5 scfm). The skein is formed as shown in Fig 16 around a central PVC pipe having an o.d. of 7.5 cm, the fibers being disposed in an annular zone around the central support, the radial width of the annular zone being about 7.5 cm, so that the o.d. of the skein is about 11.25 cm.

In a first test, air is introduced within the skein; in a second test, air is introduced around the periphery of the skein. After equilibrium is reached, operation is typically continued by back pulsing the skein with permeate at chosen intervals of time, the interval depending upon how quickly the fibers foul sufficiently to decrease the flux substantially.

The process conditions, which were held constant over the period of the test, were as follows:

| | | | |
|---|---|---|---|
| TSS | 17 g/L; | Temperature of biomass | 105° C |
| Flow rate of air | 0.2124 m³/min; | Suction on fibers | 25.4 cm of Hg |

For external aeration: A perforated flexible tube with holes about 3 mm in diameter spaced about 2.5 cm apart was wrapped around the base of the ZW 72 skein and oriented so that air is discharged in a horizontal plane, so that bubbles enter laterally into the skein, between fibers. Thereafter the bubbles rise vertically through the skein fibers. Lateral discharge helps keep the holes from plugging prematurely.
For internal aeration: The central tubular support was used as the central air distribution manifold to duct air into five 4" lengths of 1/4" pipe with 1/8" holes at 1" intervals, plugged at one end, in open flow communication with the central pipe, forming a spoke-like sparger within the skein, at the base. The number of holes is about the same as the number in the external aerator, and the flow rate of air is the same. As before the holes discharge the air laterally within the skein, and the air bubbles rise vertically within the skein, and exit the skein below the upper header.

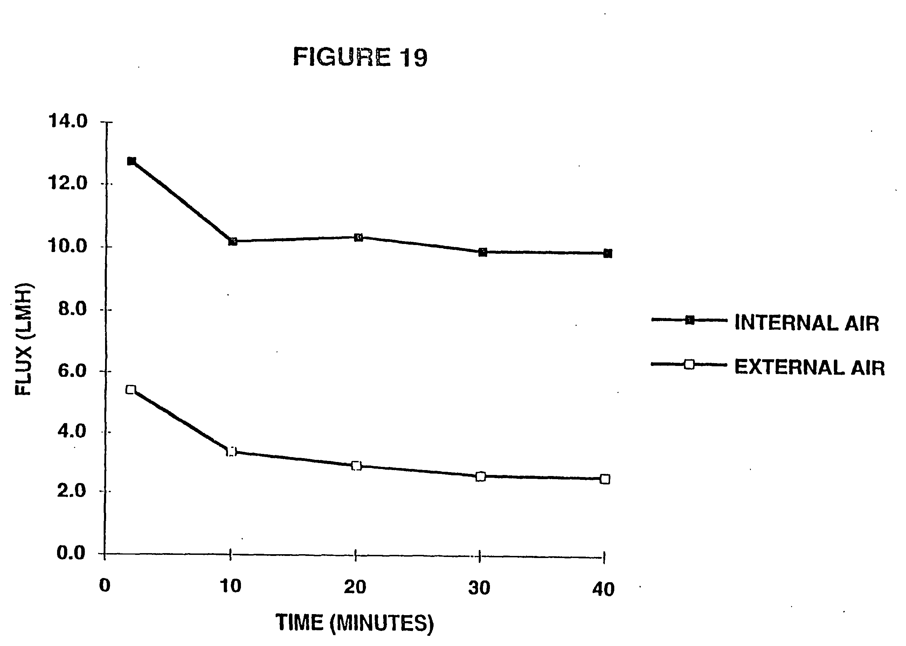

Fig 19 is a plot of flux as a function of time, until the flux reaches an equilibrium value. Thereafter the flux may be maintained by back pulsing at regular intervals. As is evident, the equilibrium flux with external aeration is about 2.6 LMH, while the flux with internal aeration is about 9.9 LMH which is nearly a four-fold improvement From the foregoing it will be evident that, since it is well-known that flux is a function of the flow rate of air, all other conditions being the same during normal operation, a higher flux is obtained with internal aeration with the same flow of air.

### Example 4

### Comparison of skeins in which one has swayable fibers, the other does not:

The slackness in the fibers is adjusted by decreasing the distance between headers. Essentially no slack is present (fibers are taut) when the headers are spaced at a distance which is the same as the length of a fiber between its opposed potted ends. A single ZW 72 skein is used having a nominal surface area of 6.7 m² is used in each test, in a bioreactor to treat wastewater contaminated with ethylene glycoL Aeration is provided as shown in Fig 9 (no internal aeration) with lateral discharge of air bubbles into the skein fibers through which bubbles rose to the top.

In the first test the headers are vertically spaced apart so that the fibers are taut and could not sway.

In the second test, the headers were brought closer by 2 cm causing a 2.5% slackness in each fiber, permitting the slack fibers to sway.

As before the process conditions, which were held constant over the period of the test, were as follows:

| | | | |
|---|---|---|---|
| Suspended solids | 17 g/L | Temperature of biomass | 10.5° C |
| Flow rate of air | 0.2124 m³/min; | Suction on fibers | 25.4 cm of Hg |

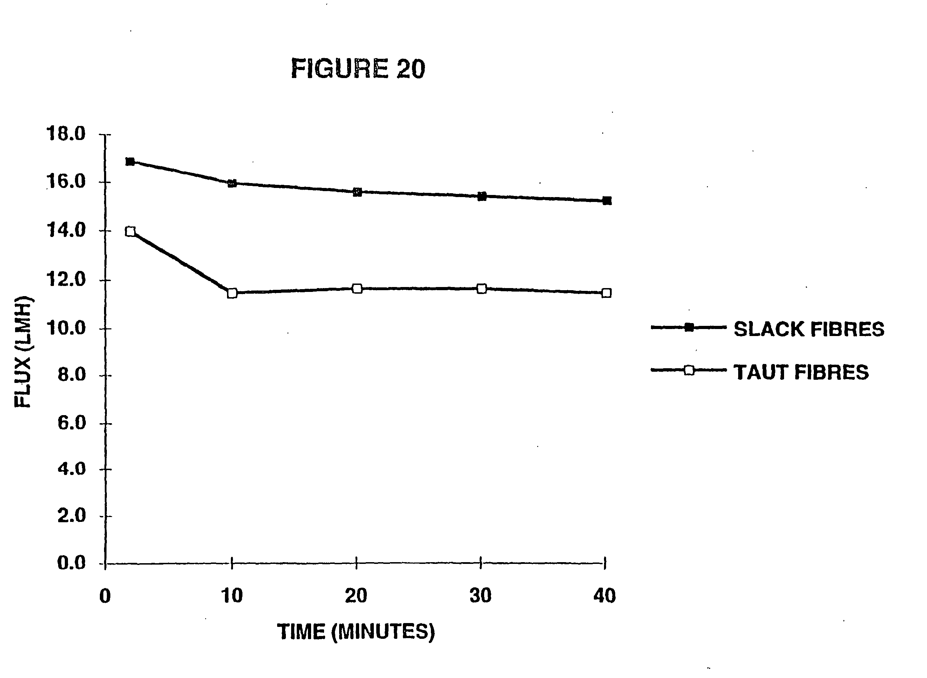

Fig 20 is a plot of flux as a function of time, until the flux reaches an equilibrium value. Thereafter the flux may be maintained by back pulsing at regular intervals as before in example 3. As is evident, the equilibrium flux with no swayability is about 11.5 LMH, while the flux with 2.5% slack is about 15.2 LMH, which is about a 30% improvement.

### Example 5

### Filtration of water with a vertical cylindrical skein to obtain clarity:

A cylindrical skein is constructed as in Fig 16 with Zenon® MF200 fibers 180 cm long, which provide a surface area of 25 m² in cylindrical headers having a diameter of 28 cm held in end-caps having an o.d. of 30 cm. Aeration is provided with a spider having perforated cross-arms with 3 mm (0.125") dia. openings which discharge about 10 liter/min (20 scfm, standard ft³/min) of air. This skein is used in four typical applications, the results of which are provided below. In each case, permeate is withdrawn with a centrifugal pump having a NPSH of about 0.3 bar (10" Hg), and after equilibrium is reached, the skein is backflushed for 30 sec with permeate every 30 min.
A. Filtration of Surface (Pond) Water having 10 mg/L TSS:
   Result - permeate having 0.0 mg/L TSS is withdrawn at a rate of 2000 liters/hr (LPH) with a turbidity of 0.1 NTU. A "5 log" reduction (reduction of original concentration by five orders of magnitude) of bacteria, algae, giardia and cryptosporidium may be obtained, thus providing potable water.
B. Filtration of Raw Sewage with 100 mg/L TSS:
   Result - permeate having 0.0 mg/L suspended solids is withdrawn at a rate of 1000 LPH (liters/hr) with a turbidity of 02 NTU. Plural such skeins may be used in a bank in the full scale treatment of industrial wastewater.
C. Filtration of a mineral suspension containing 1000 mg/L TSS of iron oxide particles:
   Result - permeate having 0.0 mg/L suspended solids is withdrawn at a rate of 3000 LPH (liters/hr) with a turbidity of 0.1 NTU. High flux is maintained with industrial wastewater containing mineral particles.
D. Filtration of fermentation broth with 10,000 mg/L bacterial cells:
   Result - permeate having 0.0 mg/L suspended solids is withdrawn at a rate of 1000 LPH (liters/hr) with a turbidity of 0.1 NTU. The broth with a high biomass concentration is filtered non-destructively to yield the desired permeate, as well as to save living cells for reuse.

### Example 6

### Special Purpose Mini-Skein:

The following examples illustrate the use of a mini-skein for typical specific uses such as filtration of (i) raw sewage to obtain solids-free water samples for colorimetric analyses, (ii) surface water for use in a recreational vehicle ("camper") or motor home, or (iii) water from a small aquarium for fish or other marine animals.

A cylindrical mini-skein is constructed as shown in Fig 16, with cylindrical headers having an o.d. of 5 cm (2") and a thickness of 2 cm (0.75") with 30 fibers, each 60 cm long to provide a surface area of 0.1 m². The skein is mounted on a base on which is also removably disposed a blower to discharge 15 L/min of air at 12 kPa (3 psig) through a sparger which has 1.6 mm (0.0625") openings, the air flowing through the skein upwards along the fibers. Also removably mounted on the base is a peristaltic pump which produces a vacuum of 03 bar (10" Hg). In each application, the self-contained skein with integral permeate pump and gas-discharge means, is placed, for operation, in a cylindrical container of the substrate to be filtered.

The results with each application (A) - (D) are listed below:
(i) Raw sewage contains 100 mg/L TSS; permeate containing 0.0 mg/L TSS having a turbidity of 0.2 NTU, is withdrawn at 0.1 LPH.
(ii) Aquarium water withdrawn contains 20 mg/L TSS, including algae, bacteria, fungus and fecal dendritus; permeate containing 0.0 mg/L TSS having a turbidity of 0.2 NTU, is withdrawn at 0.1 LPH.
(iii) Pond water withdrawn contains 10 mg/L TSS; permeate containing 0.0 mg/L TSS having a turbidity of 0.2 NTU, is withdrawn at 0.1 LPH.

### GLOSSARY

The following glossary is provided for terms in the approximate order in which they are used in the specification to define their meaning in the context in which they are used.

"array" - plural, essentially vertical fibers of substantially equal lengths, the one ends of each of which fibers are closely spaced-apart, either linearly in the transverse (y-axis herein) direction to provide at least one row, and typically plural rows of equidistantly spaced apart fibers. Less preferably, a multiplicity of fibers may be spaced in a random pattern. The opposed ends of fibers are sealed in opposed headers so that substrate does not contaminate permeate in permeate collection means in which the headers are peripherally sealed.

"bundle" - plural elements held together, e.g. plural arrays which may be a stack of planar arrays, or arcuate or circular arrays, or a rolled spiral.

"bank" - used for brevity, to refer to a bank of skeins; in the bank, a row (or other configuration) of lower headers is directly beneath a row of upper headers.

"cylindrical skein" - a vertical skein in which the permeate collection means has a cylindrical configuration.

"dead end tank" - a tank or bioreactor from which no liquid other than the permeate is removed.

"fibers" - used for brevity to refer to hollow fiber membranes.

"flux" - unit flow (liters/hr), through a membrane of unit surface area (meter²), flux is given as Lm²h or LMH.

"fugitive material" - material which is either (i) soluble in a medium in which the fibers and fixing material are not soluble, or (ii) fluidizable by virtue of having a melting point (if the material is crystalline) below that which might damage the fibers or fixing material; or, the material has a glass transition temperature Tg (if the material is non-crystalline), below that which might damage the fibers or material(s) forming the non-fugitive header, or (iii) both soluble and fluidizable.

"header" - a solid body in which one of the terminal end portions of each one of a multiplicity of fibers in the skein, is sealingly secured to preclude substrate from contaminating the permeate in the lumens of the fibers. The body is of arbitrary dimensions formed from a natural or synthetic resinous material (thermoplastic or thermosetting).

"integral header" - combination of header and permeate collection means, in which combination the header is peripherally sealed in fluid-tight relationship with the permeate collection means.

"integral single skein" - a skein in an integral finished header is formed in the permeate pan or end-cap, sealing the header therein.

"mini-skein" - a self-contained gas-scrubbed assembly of a skein having a surface area less than about 5 m², in combination with an integrally packaged gas blower and permeate pump.

"multicomponent liquid feed" - fruit juices to be clarified or concentrated; wastewater or water containing particulate matter; proteinaceous liquid dairy products such as cheese whey, and the like.

"non-vacuum pump" - generates a net suction side pressure difference, or, net positive suction head (NPSH), adequate to provide the transmembrane pressure differential generated under the operating conditions; may be a centrifugal, rotary, crossflow, flow-through, or other type.

"permeability" - flux per unit pressure, Lm²h/kPa; sometimes referred to as specific flux.

"permeate collection means" - receptacle beneath a header in which receptacle permeate collects.

"ring header" - header having a cylindrical shape.

"rectangular skein" - a vertical skein in which the permeate collection means has a configuration of a rectangular parallelpiped.

"skein" - used for brevity to refer to either a cylindrical skein or a vertical skein, or both, having plural arrays potted in opposed headers, the fibers having a critically defined length relative to the vertical distance between headers of the skein. The defined length limits the side-to-side movement of the fibers in the substrate in which they are deployed, except near the headers where there is negligible movement.

"skein fibers" - fibers which make up the cylindrical skein

"vertical skein" - an integrated combination of structural elements including (i) a multiplicity of vertical fibers of substantially equal length; (ii) a pair of headers in each of which are potted the opposed terminal portions of the fibers so as to leave their ends open; and, (iii) permeate collection means held peripherally in fluid-tight engagement with each header so as to collect permeate from the ends of the fibers.

"substrate" - multicomponent liquid feed.

"particulate matter" - micron-sized (from 1 to about 44µm) and sub-micron sized (from about 0.1µm to 1µm) filtrable matter which includes not only particulate inorganic matter, but also dead and live biologically active microorganisms, colloidal dispersions, solutions of large organic molecules such as fulvic acid and humic acid, and oil emulsions.

"restrictedly swayable" - the extent to which fibers may sway in a zone of confinement, which extent is determined by the free length of the fibers relative to the fixedly spaced-apart headers, and the turbulence of the substrate.

"stack of arrays" - plural rows of arrays, which are densely packed to form, after they are potted, a skein.

"substantially concentrically" - describes a configuration in which in which individual fibers are either vertical and spaced apart along the circumference of a circle drawn about the central vertical axis, or, spirally disposed, successive layers of the fibers typically being closely spaced-apart in the x-y plane, not only radially outwards from the central axis, but also along the spiral in that plane so that they appear to be concentrically distributed at successively increasing radial distances from the central axis.

"transmembrane pressure differential" - pressure difference across a membrane wall, resulting from the process conditions under which the membrane is operating.

"unsupported" - not supported except for spacer means to space the headers.

"vacuum pump" - capable of generating a suction of at least 75 cm of Hg.

"zone of confinement" (or "bubble zone") - a zone through which bubbles rise along the outer surfaces of the fibers. The bubble zone, in turn, is determined by one or more columns of vertically rising gas bubbles generated near the base of a skein.

## Claims

1. A membrane module comprising a plurality of hollow fiber membranes (12, 212) immersable and swayable in a substrate from which permeate is to be filtered, the membranes (12, 212) being potted in a closely-spaced relationship and in fluid-tight relationship within a header (101, 120b, 273, 283) that has first and second faces on opposite sides thereof, the membranes (12, 212) extending from the first face of the header so as to be able to contact the substrate, the membranes having open ends flush with or protruding from the second face of the header (101, 120b, 273, 283),
a permeate collection means (102, 120, 128, 129, 271, 281) in fluid communication between the open ends of the membranes (12, 212) and a permeate outlet (106, 126, 231, 281p) adapted to be connected to a source of suction, and
a gas distribution means (103, 104, 105, 107, 121, 122, 127, 130, 133, 134, 204, 241, 243, 245, 247, 286) adapted to be connected to a source of gas and adapted to discharge bubbles of the gas within the module such that, in use, the bubbles rise along the outer surfaces of the membranes (12, 212) and cause the membranes to sway,
**characterized in that**
the gas distribution means include one or more gas delivery tubes (103, 127, 245, 247, 286) that pass through the header (101, 120b, 273, 283) from the second face of the header to the first face of the header from which the membranes extend, said gas delivery tube(s) being arranged to deliver gas through the header in the direction from the second face to the first face for the gas delivered through the header by the gas delivery tube(s) to be discharged as said bubbles.

2. A membrane module according to claim 1 wherein the membranes (112, 212) are mounted relative to one another so as to scrub each other when bubbles are provided.

3. A membrane module according to claim 1 or 2 wherein the membranes (212) are sealed at their lower ends and open at their upper ends to allow removal of permeate through the header (273, 283).

4. The membrane module of any preceding claim wherein the gas distribution means discharges bubbles from locations between the membranes (112, 212).

5. The membrane module of any preceding claim wherein the membranes (112, 212) extend generally vertically when in use.

6. The membrane module of any preceding claim wherein the membranes are not confined in a shell of the module.

7. The membrane module of any preceding claim wherein the membranes (112, 212) comprise a braid and a membrane material.

8. The membrane module of any preceding claim wherein the membranes (112, 212) comprise a braided yarn covered with a water-insoluble polymeric material.

9. The membrane module of any preceding claim wherein the membranes (112, 212) comprise an organic polymer with a skin on the outside surface of the membranes (112, 212).

10. The membrane module of any preceding claim wherein the gas distribution means has a fitting (201) for connecting the gas distrbution means to the source of gas.

11. The membrane module of any preceding claims wherein the gas distribution means comprises at least one gas delivery tube (245, 247, 286, 286u) that has a portion (245, 286) with a plurality of apertures (204, 243) for discharging bubbles, said tube portion protruding from the first face of the header (273, 283) from a location within the membranes (212).

12. The membrane module of claim 11 wherein the portion of the tube (286) has apertures (204) for discharging bubbles located around its circumference.

13. The membrane module of claim 11 or 12 wherein the portion of the tube (286) has a plurality of apertures (204) for discharging bubbles at a plurality of locations along its length.

14. The membrane module of any of claims 11 to 13 wherein the membranes (212) are potted in a ring around the portion of tube (245, 286),

15. The membrane module of any preceding claim wherein the permeate collection means (271, 281) is adjacent to the second face of the header (273, 283) and the lumens of the membranes (212) are in fluid communication with the permeate collection means (271, 281) through the second face of the header (273, 283).

16. The membrane module of any of claims 11 to 14 wherein the gas delivery tube (245, 247, 286, 286u) passes through the header (273, 283) and through the permeate collection means (271, 281), the permeate collection means (271, 281) being in communication with the header (273, 283).

17. The membrane module of any preceding claim wherein the gas distribution means further comprises a manifold (107) connected to the one or more gas delivery tubes (103).

18. The membrane module of claim 17, wherein the membranes (12) extend upwards from the header (101) and the manifold (107) is located below the header (101).

19. The module of any preceding claim wherein the sway of the membranes (112, 212) is confined within a vertical zone of movement, the periphery of which zone is defined by side-to-side movement of outer fibres.

20. The module of any preceding claim arranged so that bubbles, when discharged, flow vertically upwards between and parallel to the membranes (112, 212).

21. The module of any preceding claim wherein ends of the membranes (112) open into the permeate collection means (126, 128, 129) and the gas delivery tubes (127) pass through the permeate collection means (126, 128, 129).

22. The module of any preceding claim wherein the gas delivery tubes (103,127) discharge lines of bubbles, a line of bubbles located on each lateral side of the header (101, 120b).

23. The module of claim 22 wherein additional lines of bubbles are located between the membranes (112) such that there are n+1 lines of bubbles for n sets of membranes (112).

24. The module of any preceding claim wherein the membranes (112, 212) extend between upper and lower headers and the length of the membranes (112, 212) is not more than 5% greater than the distance between points where the membranes protrude from the upper and lower headers.

25. The module of claim 24 wherein the length of the membranes (112, 212) is between 0.1% and 5% greater than the distance between points where the membranes (112, 212) protrude from the upper and lower headers.

26. The module of claim 25 wherein the length of the membranes (112, 212) is between 0.1% and 1% in excess of the distance between points where the membranes (112, 212) protrude from the upper and lower headers.

27. The module of any of claims 1 to 10 wherein the gas delivery tube (127) has an upper open end with an aperture (133), the gas delivery tube (127) passing through the header and protruding beyond the second face of the header (120b) and communicating with a plenum for carrying air to the gas delivery tube (127).

28. The module of claim 27 wherein ends of the membranes (112) open into the permeate collection means (126, 128, 129) and the air tube (127) passes through the permeate collection means (126, 128, 129).

29. The module of any preceding claim wherein the header (101, 120b, 273, 283) has a cushioning lamina surrounding the membranes (112, 212) where they extend from the header (101, 120b, 273, 283).

30. A system for withdrawing filtered permeate from a substrate, comprising:
a tank or reservoir (90) containing a substrate at ambient pressure;
a module of hollow fiber membranes according to any preceding claim;
a source of suction in fluid communication with the permeate outlet of each module and operable to supply suction to withdraw permeate from the lumens of the membranes (112, 212); and,
a source of gas connected to the gas distribution means to supply a gas continually or intermittently.

31. The system of claim 30 having a backwashing system for backwashing the module(s) with a liquid.

32. The system of claim 32 wherein the liquid comprises permeate.

33. The system of any of claims 30 to 32 wherein the tank or reservoir (90) contains a slow moving or captive substrate.

34. The system of any of claims 30 to 33 having a fitting (201) located above the substrate for connecting the gas delivery tube or tubes (104, 104', 105, 105', 130) to the source of gas.

35. The system of any of claims 30 to 34 wherein the tank or reservoir (90) is a dead end tank.

## Patentansprüche

1. Ein Membranmodul mit einer Mehrzahl von Hohlfasermembranen (12, 212), die in ein Substrat eintauchbar und schwingfähig sind, aus dem Permeat gefiltert werden soll, wobei die Membranen (12, 212) in einem eng voneinander beabstandeten Verhältnis und in einem fluiddichten Verhältnis in ein Kopfelement (101, 120b, 273, 283) eingegossen sind, das eine erste und eine zweite Fläche auf gegenüberliegenden Seiten desselben aufweist, wobei die Membranen (12, 212) sich von der ersten Fläche des Kopfelements erstrecken, um so in der Lage zu sein, das Substrat zu berühren, wobei die Membranen offene Enden aufweisen, die bündig mit der zweiten Fläche des Kopfelements (101, 120b, 273, 283) sind oder von derselben vorstehen,
einer Permeatauffangeinrichtung (102, 120, 128, 129, 271, 281), die in Fluidkommunikation zwischen den offenen Enden der Membranen (12, 212) und einem Permeatauslass (106, 126, 231, 281p) steht, der angepasst ist, um mit einer Saugquelle verbunden zu sein, und
einer Gasverteilungseinrichtung (103, 104, 105, 107, 121, 122, 127, 130, 133, 134, 204, 241, 243, 245, 247, 286), die angepasst ist, um mit einer Gasquelle verbunden zu sein, und angepasst ist, um Blasen des Gases innerhalb des Moduls abzugeben, derart, dass bei Gebrauch die Blasen entlang der äußeren Oberflächen der Membranen (12, 212) aufsteigen und bewirken, dass die Membranen schwingen,
**dadurch gekennzeichnet, dass**
die Gasverteilungseinrichtung eine oder mehrere Gaszufuhrröhren (103, 127, 245, 247, 286) umfasst, die durch das Kopfelement (101, 120b, 273, 283) von der zweiten Fläche des Kopfelements zu der ersten Fläche des Kopfelements, von der sich die Membranen erstrecken, verlaufen, wobei die Gaszufuhrröhre/n angeordnet ist/sind, um Gas durch das Kopfelement in der Richtung von der zweiten Fläche zu der ersten Fläche zuzuführen, damit das Gas, das durch die Gaszufuhrröhre/n durch das Kopfelement zugeführt wird, als die Blasen abgegeben wird.

2. Ein Membranmodul gemäß Anspruch 1, bei dem die Membranen (12, 212) relativ zueinander so angebracht sind, dass sie aneinander scheuern, wenn Blasen bereitgestellt werden.

3. Ein Membranmodul gemäß Anspruch 1 oder 2, bei dem die Membranen (212) an ihren unteren Enden abgedichtet und an ihren oberen Enden offen sind, um eine Entnahme von Permeat durch das Kopfelement (273, 283) zu ermöglichen.

4. Das Membranmodul gemäß einem der vorhergehenden Ansprüche, bei dem die Gasverteilungseinrichtung Blasen von Orten zwischen den Membranen (112, 212) abgibt.

5. Das Membranmodul gemäß einem der vorhergehenden Ansprüche, bei dem die Membranen (112, 212) sich bei Gebrauch allgemein vertikal erstrecken.

6. Das Membranmodul gemäß einem der vorhergehenden Ansprüche, bei dem die Membranen nicht von einem Gehäuse des Moduls umgeben sind.

7. Das Membranmodul gemäß einem der vorhergehenden Ansprüche, bei dem die Membranen (112, 212) eine Flechtung und ein Membranmaterial aufweisen.

8. Das Membranmodul gemäß einem der vorhergehenden Ansprüche, bei dem die Membranen (112, 212) ein geflochtenes Garn, das mit einem wasserunlöslichen Polymermaterial bedeckt ist, aufweisen.

9. Das Membranmodul gemäß einem der vorhergehenden Ansprüche, bei dem die Membranen (112, 212) ein organisches Polymer mit einer Haut auf der Außenoberfläche der Membranen (112, 212) aufweisen.

10. Das Membranmodul gemäß einem der vorhergehenden Ansprüche, bei dem die Gasverteilungseinrichtung ein Anschlussstück (201) zum Verbinden der Gasverteilungseinrichtung mit der Gasquelle aufweist.

11. Das Membranmodul gemäß einem der vorhergehenden Ansprüche, bei dem die Gasverteilungseinrichtung zumindest eine Gaszufuhrröhre (245, 247, 286, 286u) aufweist, die einen Abschnitt (245, 286) mit einer Mehrzahl von Öffnungen (243, 204) zum Abgeben von Blasen aufweist, wobei der Röhrenabschnitt von der ersten Fläche des Kopfelementes (273, 283) von einem Ort innerhalb der Membranen (212) vorsteht.

12. Das Membranmodul gemäß Anspruch 11, bei dem der Abschnitt der Röhre (286) Öffnungen (204) zum Abgeben von Blasen aufweist, die sich um dessen Umfang befinden.

13. Das Membranmodul gemäß Anspruch 11 oder 12, bei dem der Abschnitt der Röhre (286) eine Mehrzahl von Öffnungen (204) zum Abgeben von Blasen an einer Mehrzahl von Orten entlang seiner Länge aufweist.

14. Das Membranmodul gemäß einem der Ansprüche 11 bis 13, bei dem die Membranen (212) in einen Ring um den Abschnitt der Röhre (245, 286) eingegossen sind.

15. Das Membranmodul gemäß einem der vorhergehenden Ansprüche, bei dem die Permeatauffangeinrichtung (271, 281) benachbart zu der zweiten Fläche des Kopfelementes (273, 283) ist und die Lumen der Membranen (212) in Fluidkommunikation mit der Permeatauffangeinrichtung (271, 281) durch die zweite Fläche des Kopfelementes (273, 283) stehen.

16. Das Membranmodul gemäß einem der Ansprüche 11 bis 14, bei dem die Gaszufuhrröhre (245, 247, 286, 286u) durch das Kopfelement (273, 283) und durch die Permeatauffangeinrichtung (271, 281) verläuft, wobei die Permeatauffangeinrichtung (271, 281) in Kommunikation mit dem Kopfelement (273, 283) steht.

17. Das Membranmodul gemäß einem der vorhergehenden Ansprüche, bei dem die Gasverteilungseinrichtung ferner einen Verteiler (107) aufweist, der mit dem einen oder den mehreren Gaszufuhrröhren (103) verbunden ist.

18. Das Membranmodul gemäß Anspruch 17, bei dem die Membranen (12) sich von dem Kopfelement (101) nach oben erstrecken und der Verteiler (107) unterhalb des Kopfelements (101) positioniert ist.

19. Das Modul gemäß einem der vorhergehenden Ansprüche, bei dem das Schwingen der Membranen (112, 212) innerhalb einer vertikalen Zone der Bewegung eingegrenzt ist, wobei die Peripherie dieser Zone durch eine Seite-zu-Seite-Bewegung äußerer Fasern definiert ist.

20. Das Modul gemäß einem der vorhergehenden Ansprüche, das so angeordnet ist, dass Blasen, wenn sie abgegeben werden, vertikal zwischen den Membranen (112, 212) und parallel zu denselben nach oben strömen.

21. Das Modul gemäß einem der vorhergehenden Ansprüche, bei dem sich Enden der Membranen (112) in die Permeatauffangeinrichtung (126, 128, 129) öffnen und die Gaszufuhrröhren (127) durch die Permeatauffangeinrichtung (126, 128, 129) verlaufen.

22. Das Modul gemäß einem der vorhergehenden Ansprüche, bei dem die Gaszufuhrröhren (103, 127) Reihen von Blasen abgeben, wobei eine Reihe von Blasen auf jeder lateralen Seite des Kopfelementes (101, 120b) positioniert ist.

23. Das Modul gemäß Anspruch 22, bei dem zusätzliche Reihen von Blasen zwischen den Membranen (112) derart positioniert sind, dass es n+1 Reihen von Blasen für n Sätze von Membranen (112) gibt.

24. Das Modul gemäß einem der vorhergehenden Ansprüche, bei dem die Membranen (112, 212) sich zwischen einem oberen und einem unteren Kopfelement erstrecken und die Länge der Membranen (112, 212) um nicht mehr als 5 % größer ist als die Entfernung zwischen Punkten, an denen die Membranen von dem oberen und dem unteren Kopfelement vorstehen.

25. Das Modul gemäß Anspruch 24, bei dem die Länge der Membranen (112, 212) zwischen 0,1 % und 5 % größer ist als die Entfernung zwischen Punkten, an denen die Membranen (112, 212) von dem oberen und dem unteren Kopfelement vorstehen.

26. Das Modul gemäß Anspruch 25, bei dem die Länge der Membranen (112, 212) zwischen 0,1 % und 1 % mehr als die Entfernung zwischen Punkten beträgt, an denen die Membranen (112, 212) von dem oberen und dem unteren Kopfelement vorstehen.

27. Das Modul gemäß einem der Ansprüche 1 bis 10, bei dem die Gaszufuhrröhre (127) ein oberes offenes Ende mit einer Öffnung (133) aufweist, wobei die Gaszufuhrröhre (127) durch das Kopfelement verläuft und über die zweite Fläche des Kopfelementes (120b) vorsteht und mit einem Plenum zum Führen von Luft zu der Gaszufuhrröhre (127) kommuniziert.

28. Das Modul gemäß Anspruch 27, bei dem Enden der Membranen (112) sich in die Permeatauffangeinrichtung (126, 128, 129) öffnen und die Luftröhre (127) durch die Permeatauffangeinrichtung (126, 128, 129) verläuft.

29. Das Modul gemäß einem der vorhergehenden Ansprüche, bei dem das Kopfelement (101, 120b, 273, 283) eine dämpfende Schicht aufweist, die die Membranen (112, 212) umgibt, wo sich dieselben von dem Kopfelement (101, 120b, 273, 283) erstrecken.

30. Ein System zum Entnehmen von gefiltertem Permeat aus einem Substrat, mit folgenden Merkmalen:
einem Tank oder Reservoir (90) mit einem unter Umgebungsdruck stehenden Substrat;
einem Modul von Hohlfasermembranen gemäß einem der vorhergehenden Ansprüche;
einer Saugquelle, die mit dem Permeatauslass jedes Moduls in Fluidkommunikation steht und zum Anlegen eines Saugzugs zum Entnehmen von Permeat aus den Lumen der Membranen (112, 212) betreibbar ist; und
einer Gasquelle, die mit der Gasverteilungseinrichtung verbunden ist, zum kontinuierlichen oder intermittierenden Zuführen eines Gases.

31. Das System gemäß Anspruch 30, das ein Rückspülsystem zum Rückspülen des/ der Moduls/e mit einer Flüssigkeit aufweist.

32. Das System gemäß Anspruch 31, bei dem die Flüssigkeit Permeat aufweist.

33. Das System gemäß einem der Ansprüche 30 bis 32, bei dem der Tank oder das Reservoir (90) ein sich langsam bewegendes oder kaptives Substrat enthält.

34. Das System gemäß einem der Ansprüche 30 bis 33, das ein Anschlussstück (201), das über dem Substrat positioniert ist, zum Verbinden der Gaszufuhrröhre oder der -röhren (104, 104', 105, 105', 130) mit der Gasquelle aufweist.

35. Das System gemäß einem der Ansprüche 30 bis 34, bei dem der Tank oder das Reservoir (90) ein Tank mit blindem Ende ist.

## Revendications

1. Module à membranes comprenant plusieurs membranes à fibres creuses (12, 212) pouvant être plongées et pouvant osciller dans un substrat depuis lequel du perméat doit être filtré, les membranes (12, 212) étant encapsulées selon une relation d'espacement serré et selon une relation étanche au fluide au sein d'un socle (101, 120b, 273, 283) présentant une première et une seconde faces sur ses côtés opposés, les membranes (12, 212) s'étendant depuis la première face du socle de façon à pouvoir être en contact avec le substrat, les membranes ayant des extrémités ouvertes qui affleurent avec ou font saillie depuis la seconde face du socle (101, 120b, 273, 283),
un moyen de collecte du perméat (102, 120, 128, 129, 271, 281) en communication de fluide entre les extrémités ouvertes des membranes (12, 212) et une sortie de perméat (106, 126, 231, 281p) adaptée pour être connectée à une source d'aspiration, et
un moyen de distribution de gaz (103, 104, 105, 107, 121, 122, 127, 130, 133, 134, 204, 241, 243, 245, 247, 286) adapté pour être connecté à une source de gaz et adapté pour décharger des bulles de gaz au sein du module, de façon telle que, à l'usage, les bulles remontent le long des surfaces externes des membranes (12, 212) et entraînent l'oscillation des membranes,
**caractérisé en ce que**
le moyen de distribution de gaz comprend un ou plusieurs tubes de décharge de gaz (103, 127, 245, 247, 286) qui passent par le socle (101, 120b, 273, 283) depuis la seconde face du socle vers la première face du socle depuis laquelle s'étendent les membranes, ledit(lesdits) tube(s) de décharge de gaz étant disposé(s) pour décharger du gaz via le socle dans la direction de la seconde face vers la première face pour que le gaz déchargé via le socle par le(s) tube(s) de décharge de gaz soit déchargé sous forme desdites bulles.

2. Module à membranes selon la revendication 1, dans lequel les membranes (112, 212) sont montées les unes par rapport aux autres de façon à frotter les unes contre les autres lorsque des bulles sont fournies.

3. Module à membranes selon la revendication 1 ou 2, dans lequel les membranes (212) sont scellées au niveau de leurs extrémités inférieures et ouvertes au niveau de leurs extrémités supérieures pour permettre le retrait du perméat via le socle (273, 283).

4. Module à membranes selon l'une quelconque des revendications précédentes, dans lequel le moyen de distribution de gaz décharge des bulles depuis des emplacements entre les membranes (112, 212).

5. Module à membranes selon l'une quelconque des revendications précédentes, dans lequel les membranes (112, 212) s'étendent généralement verticalement à l'usage.

6. Module à membranes selon l'une quelconque des revendications précédentes, dans lequel les membranes ne sont pas confinées dans une enveloppe du module.

7. Module à membranes selon l'une quelconque des revendications précédentes, dans lequel les membranes (112, 212) comportent une tresse et un matériau de membrane.

8. Module à membranes selon l'une quelconque des revendications précédentes, dans lequel les membranes (112, 212) comportent un fil tressé recouvert d'un matériau polymère insoluble dans l'eau.

9. Module à membranes selon l'une quelconque des revendications précédentes, dans lequel les membranes (112, 212) comprennent un polymère organique avec une peau sur la surface externe des membranes (112, 212).

10. Module à membranes selon l'une quelconque des revendications précédentes, dans lequel le moyen de distribution de gaz a un raccord (201) pour connecter le moyen de distribution de gaz à la source de gaz.

11. Module à membranes selon l'une quelconque des revendications précédentes, dans lequel le moyen de distribution de gaz comprend au moins un tube de décharge de gaz (245, 247, 286, 286u) qui présente une portion (245, 286) avec plusieurs ouvertures (204, 243) pour décharger des bulles, ladite portion de tube faisant saillie depuis la première face du socle (273, 283) depuis un emplacement au sein des membranes (212).

12. Module à membranes selon la revendication 11, dans lequel la portion du tube (286) a des ouvertures (204) pour décharger des bulles situées autour de sa circonférence.

13. Module à membranes selon la revendication 11 ou 12, dans lequel la portion du tube (286) a plusieurs ouvertures (204) pour décharger des bulles au niveau de plusieurs emplacements répartis sur sa longueur.

14. Module à membranes selon l'une quelconque des revendications 11 à 13, dans lequel les membranes (212) sont encapsulées dans un anneau autour de la portion du tube (245, 286).

15. Module à membranes selon l'une quelconque des revendications précédentes, dans lequel le moyen de collecte du perméat (271, 281) est adjacent à la seconde face du socle (273, 283) et les lumières des membranes (212) se trouvent en communication de fluide avec le moyen de collecte du perméat (271, 281) via la seconde face du socle (273, 283).

16. Module à membranes selon l'une quelconque des revendications 11 à 14, dans lequel le tube de décharge de gaz (245, 247, 286, 286u) passe par le socle (273, 283) et par le moyen de collecte du perméat (271, 281), le moyen de collecte du perméat (271, 281) étant en communication avec le socle (273, 283).

17. Module à membranes selon l'une quelconque des revendications précédentes, dans lequel le moyen de distribution de gaz comprend en outre un distributeur (107) connecté à un ou plusieurs tubes de décharge de gaz (103).

18. Module à membranes selon la revendication 17, dans lequel les membranes (12) s'étendent vers le haut depuis le socle (101) et le distributeur (107) est situé sous le socle (101).

19. Module selon l'une quelconque des revendications précédentes, dans lequel l'oscillation des membranes (112, 212) est confinée au sein d'une zone verticale de mouvement, la périphérie de ladite zone étant définie par un mouvement des fibres externes d'un côté à l'autre.

20. Module selon l'une quelconque des revendications précédentes, disposé de façon telle que les bulles, lorsqu'elles sont déchargées, s'écoulent verticalement vers le haut entre et parallèlement aux membranes (112, 212).

21. Module selon l'une quelconque des revendications précédentes, dans lequel les extrémités des membranes (112) s'ouvrent dans le moyen de collecte du perméat (126, 128, 129) et les tubes de décharge de gaz (127) passent par le moyen de collecte du perméat (126, 128, 129).

22. Module selon l'une quelconque des revendications précédentes, dans lequel les tubes de décharge de gaz (103, 127) déchargent des lignes de bulles, une ligne de bulles étant située sur chaque face latérale du socle (101, 120b).

23. Module selon la revendication 22, dans lequel des lignes de bulles supplémentaires sont situées entre les membranes (112) de façon telle qu'il y a n+1 lignes de bulles pour n jeux de membranes (112).

24. Module selon l'une quelconque des revendications précédentes, dans lequel les membranes (112, 212) s'étendent entre les socles supérieur et inférieur et la longueur des membranes (112, 212) n'excède pas 5 % de plus que la distance entre les emplacements où les membranes font saillie depuis les socles supérieur et inférieur.

25. Module selon la revendication 24, dans lequel la longueur des membranes (112, 212) est comprise entre 0,1 % et 5 % de plus que la distance entre les emplacements où les membranes (112, 212) font saillie depuis les socles supérieur et inférieur.

26. Module selon la revendication 25, dans lequel la longueur des membranes (112, 212) est comprise entre 0,1 % et 1 % de plus que la distance entre les emplacements où les membranes (112, 212) font saillie depuis les socles supérieur et inférieur.

27. Module selon l'une quelconque des revendications 1 à 10, dans lequel le tube de décharge de gaz (127) a une extrémité supérieure ouverte avec une ouverture (133), le tube de décharge de gaz (127) passant par le socle et faisant saillie au-delà de la seconde face du socle (120b) et communiquant avec un collecteur primaire permettant de transporter de l'air vers le tube de décharge de gaz (127).

28. Module selon la revendication 27, dans lequel les extrémités des membranes (112) s'ouvrent dans le moyen de collecte du perméat (126, 128, 129) et le tube d'air (127) passe par le moyen de collecte du perméat (126, 128, 129).

29. Module selon l'une quelconque des revendications précédentes, dans lequel le socle (101, 120b, 2732, 283) a une plaque d'amortissement entourant les membranes (112, 212) à l'endroit où elles s'étendent depuis le socle (101, 120b, 273, 283).

30. Système de retrait de perméat filtré d'un substrat, comprenant :
une cuve ou réservoir (90) contenant un substrat à la pression ambiante ;
un module à membranes à fibres creuses selon l'une des revendications précédentes ;
une source d'aspiration en communication de fluide avec la sortie du perméat de chaque module et pouvant fonctionner pour appliquer une aspiration permettant de retirer le perméat des lumières des membranes (112, 212); et
une source de gaz connectée au moyen de distribution du gaz pour amener un gaz de façon continue ou intermittente.

31. Système selon la revendication 30, comportant un système de lavage à contre-courant pour laver à contre courant le(s) module(s) avec un liquide.

32. Système selon la revendication 31, dans lequel le liquide comprend un perméat.

33. Système selon l'une quelconque des revendications 30 à 32, dans lequel la cuve ou le réservoir (90) contient un substrat captif ou à déplacement lent.

34. Système selon l'une quelconque des revendications 30 à 33, comportant un raccord (201) situé au-dessus du substrat pour connecter le ou les tubes de décharge de gaz (104, 104', 105, 105', 130) à la source de gaz.

35. Système selon l'une quelconque des revendications 30 à 34, dans lequel la cuve ou le réservoir (90) est une cuve en cul de sac.
